# EUROPÄISCHE PATENTSCHRIFT

(11) **EP 3 505 232 B1**
(45) Veröffentlichungstag und Bekanntmachung des Hinweises auf die Patenterteilung: **30.04.2025**
(21) Anmeldenummer: 17002086.1
(22) Anmeldetag: 28.12.2017
(51) Int. Cl.: B29D 11/00, B01F 25/451, B01F 31/65, B01F 33/84, B01F 35/71

(54) **BESCHICHTUNGSANLAGE MIT EINER VORRICHTUNG ZUM MISCHEN UND/ODER DOSIEREN VON FLÜSSIGEN BESCHICHTUNGSSTOFFEN UND VERFAHREN ZUM FÄRBEN OPTISCHER GLÄSER**
COATING INSTALLATION WITH A DEVICE FOR MIXING AND/OR DOSING OF LIQUID COATING MATERIALS AND METHOD FOR COLOURING OPTICAL GLASSES
INSTALLATION DE REVÊTEMENT AVEC UN DISPOSITIF DE MÉLANGE ET/OU DE DOSAGE DE MATÉRIAUX DE REVÊTEMENT LIQUIDES, PROCÉDÉ DE COLORATION DE LUNETTES OPTIQUES

(43) Veröffentlichungstag der Anmeldung: 03.07.2019
(73) Patentinhaber: Satisloh AG, 6340 Baar (CH)
(72) Erfinder: Peter, Marc M., CH-8055 Zürich (CH); Roth, Christian, CH-8051 Zürich (CH); Strobel, Reto, CH-8052 Zürich (CH); Scholze, Stephan, CH-8903 Birmensdorf (CH)
(74) Vertreter: Oppermann, Mark

(56) Entgegenhaltungen:
- EP-A1- 2 963 459
- WO-A1-2014/135859
- US-A1- 2008 047 488

## Beschreibung

### TECHNISCHES GEBIET

Die vorliegende Erfindung bezieht sich allgemein auf eine Beschichtungsanlage zum individuellen Beschichten von Substraten nach dem Oberbegriff des Patentanspruchs 1 sowie ein Verfahren zum individuellen Färben von optischen Gläsern entsprechend dem Patentanspruch 12. Genauer gesagt bezieht sich die Erfindung auf eine Beschichtungsanlage zum individuellen Beschichten von Brillenlinsen und ein Verfahren zum individuellen Färben von Brillenlinsen.

Wenn nachfolgend im Zusammenhang mit der Beschichtung von Substraten beispielhaft für flüssige Beschichtungsstoffe von Farben die Rede ist, die gemischt, dosiert bzw. auf ein Substrat aufgebracht werden, soll dies nicht auf Farben beschränkend verstanden werden, vielmehr sollen auch andere flüssige Beschichtungsstoffe, wie photochrome Substanzen zum Eindunkeln von optischen Gläsern, klare Grundierungen (sogenannte Primer), klare Hartlacke etc., soweit diese zu dosieren und/oder aus mehreren Bestandteilen zu mischen sind, mit umfasst sein.

### STAND DER TECHNIK

Um die Augen vor unangenehmen oder schädlichen Auswirkungen des Sonnenlichts zu schützen, werden Brillenlinsen eingefärbt bzw. getönt, was die Lichtdurchlässigkeit der Brillenlinsen zu den Augen des Brillenträgers reduziert. Der individuelle, oft auch modischen Einflüssen unterliegende Farbwunsch des Brillenträgers kann hierbei sehr verschieden ausfallen. Ferner ist es verbreitete Praxis, einzelne sichtbare Lichtbestandteile (z.B. Blauanteil) oder nicht sichtbare Lichtbestandteile (ultraviolette Lichtstrahlung) mit bestimmten Färbungen bzw. Beschichtungen gezielt zu reduzieren.

Im Stand der Technik sind bereits verschiedene Verfahren zum Einfärben von Brillenlinsen bekannt. So können Brillenlinsen aus Mineralglas schon im Schmelzprozess durch Zugabe eines Farbstoffs oder später durch Aufdampfen absorbierender Schichten gefärbt werden. Das Einfärben von Brillenlinsen aus Kunststoff erfolgt in der Regel durch Tauchen in einem Tauchbad mit einer wässrigen Farbstofflösung, für die meist Textilfarben verwendet werden. Die Färbung entsteht hierbei durch Diffusion des Farbstoffs in das Kunststoffmaterial der Brillenlinse oder in eine zuvor auf das Kunststoffmaterial aufgebrachte Beschichtung, welche zur Aufnahme entsprechender Farbstoffe geeignet ist. Die Intensität der Färbung ist dabei von verschiedenen Faktoren, wie der Einwirkzeit, der Temperatur und der im Tauchbad vorliegenden Farbstoffkonzentration abhängig. Deshalb ist es erforderlich, die Brillenlinsen während des Prozesses manuell aus dem Tauchbad zu entnehmen und visuell zu überprüfen, um die gewünschte Färbung zu erhalten, was einer vollständigen Automatisierung des Tauchprinzips entgegensteht. Das Erzielen einer bestimmten Färbung ist zudem stark von der Erfahrung des hierfür eingesetzten Personals abhängig, so dass die Reproduzierbarkeit einer bestimmten Färbung problematisch ist. Darüber hinaus können mit diesem Verfahren individuelle Farbtöne für einzelne Linsen oder Linsenpaare wirtschaftlich nicht realisiert werden, weil für jeden individuellen Farbton ein Tauchbad mit einer spezifischen Farbzusammensetzung vorgehalten bzw. angesetzt werden müsste.

Aus der Druckschrift EP 1 388 607 A2 ist ein alternatives Verfahren zum Färben von Brillenlinsen aus Kunststoff bekannt, welches auf der Sublimation und Abscheidung eines Farbstoffs auf der zu färbenden Brillenlinse mit anschließender Diffusion des Farbstoffs in das Kunststoffmaterial der Brillenlinse beruht. Das Diffusionsverhalten wird hierbei durch das verwendete Kunststoffmaterial sowie dessen Alter beeinflusst, so dass auch bei diesem Vorgehen die Reproduzierbarkeit bestimmter Färbungen problematisch erscheint. Zudem handelt es sich infolge der für die einzelnen Prozessschritte benötigten Zeiten um ein sehr langsames Verfahren, was einem Einsatz in einem industriellen Maßstab entgegensteht.

In der Druckschrift JP 09-099494 A wird des Weiteren vorgeschlagen, die Brillenlinsen mittels eines Tintenstrahldruckers direkt mit einer Farbe zu bedrucken. Als Alternative hierzu offenbart die Druckschrift WO 2006/079715 A1 ein Verfahren, bei dem die Brillenlinsen zunächst mit einer bedruckbaren Grundierung (Primer) versehen werden, bevor sie durch Tintenstrahlbedrucken des Primers individuell eingefärbt werden. Bei beiden Verfahren werden Farbstoffe bzw. Pigmente durch Zugabe eines Bindemittels oder Harzes auf der Linsenoberfläche gebunden. Mit beiden Verfahren ist es möglich, Farb- bzw. Tönungsverläufe (Gradienten) zu erzeugen. Ein Problem bei diesem Vorgehen wird allerdings darin gesehen, dass beim Bedrucken verfahrensbedingt gerasterte bzw. pixelige Farbaufträge erzeugt werden, was zumeist nicht erwünscht ist.

In der Druckschrift EP 1 683 645 A1 wird ferner ein Verfahren zum Einfärben von optischen Linsen beschrieben, bei dem auf eine Linse eine bedruckbare und einfach wieder zu entfernende Schicht aufgebracht wird. Diese Schicht wird sodann mittels eines Tintenstrahldruckers bedruckt und nach durch die Schicht erfolgter Diffusion des Farbstoffs in die Linse wieder von der Linse entfernt. Auch dieses Verfahren erfordert jedoch eine geraume Zeit, was einem industriellen Einsatz wiederum entgegensteht.

Zur Herstellung von einheitlich gefärbten Brillenlinsen wird in der Druckschrift DE 695 35 130 T2 vorgeschlagen, auf eine oder alle Oberflächen einer Brillenlinse einen flüssigen und härtbaren Überzug, welcher ein färbendes Material enthält, z.B**.** durch Schleuder- oder Tauchbeschichten aufzubringen und diesen Überzug sodann mittels UV-Licht zu härten, wobei die färbenden Farbstoffe oder Pigmente entweder in der Grundierung oder im harten Überzug der Brillenlinse oder in beiden verwendet werden können. Derartige auch als Farbstoffträger dienende Hartlacke werden auch in der Druckschrift KR 100807001 B1 beschrieben. Einzelheiten zu Aufbau und Funktion geeigneter Mischvorrichtungen bzw. Beschichtungsanlagen sind diesen Druckschriften indes nicht zu entnehmen.

Eine Beschichtungsanlage mit den Merkmalen des Oberbegriffs des Patentanspruchs 1 ist aus der Druckschrift US 2008/0035053 A1 bekannt.

Des Weiteren offenbart die Druckschrift WO 2014/135859 A1 einen Syntheseapparat zur automatisierten Durchführung gewünschter Reaktionen mit biochemischen Molekülen wie DNA, RNA und Proteinen. Die hierfür benötigten Reaktionskomponenten werden, wie in der Fig. 2 dieser Druckschrift dargestellt, in Vorratsbehältern vorgehalten, die über ein Mehrfachventil wahlweise mit einer Spritzenpumpe verbunden werden können, welche mittels eines Magnetantriebs angetrieben wird. Ferner weist der Syntheseapparat einen Reaktionskessel auf, dessen Zulauf ebenfalls über das Mehrfachventil mit der Spritzenpumpe verbunden werden kann. Entleert wird der Reaktionskessel über einen trichterförmigen Abschnitt, der in einem Ablauf des Reaktionskessels mündet und über ein zweites Mehrfachventil mit einer zweiten Spritzenpumpe verbunden werden kann. Die zweite Spritzenpumpe kann schließlich über das zweite Mehrfachventil mit einem Flüssigkeitsausgang verbunden werden.

Darüber hinaus ist diesem Stand der Technik allgemein zu entnehmen, dass in einer Ausführungsform eine einzige Pumpe eingesetzt würde, um die Reaktionskomponenten bereitzustellen sowie das Reaktionsgemisch zu bewegen und abzuziehen. Weitere Details hierzu gibt diese Druckschrift indes nicht her.

Die Druckschrift EP 2 963 459 A1 offenbart schließlich ein Verfahren und eine Vorrichtung zur beidseitigen Rotationsbeschichtung von Brillenlinsen. Details einer Vorrichtung zum Mischen und/oder Dosieren von flüssigen Beschichtungsstoffen hierfür sind diesem Stand der Technik allerdings nicht zu entnehmen.

### AUFGABENSTELLUNG

Der Erfindung liegt die Aufgabe zugrunde, eine mit einer möglichst einfach ausgebildeten Vorrichtung zum Mischen und/oder Dosieren von flüssigen Beschichtungsstoffen versehene Beschichtungsanlage zum individuellen Beschichten von Substraten, nämlich Brillenlinsen, zu schaffen, die es gestattet, flüssige Beschichtungsstoffe in gut reproduzierbarer Weise zu mischen bzw. zu dosieren, und geeignet ist, insbesondere in einem automatisierten, schnellen und kostengünstigen Verfahren zum individuellen Einfärben auch einzelner Brillenlinsen eingesetzt zu werden. Die Erfindungsaufgabe umfasst ferner die Angabe eines Verfahrens zum individuellen Färben von optischen Gläsern, namentlich Brillenlinsen.

### DARSTELLUNG DER ERFINDUNG

Diese Aufgaben werden durch eine Beschichtungsanlage zum individuellen Beschichten von Substraten, nämlich Brillenlinsen, mit den Merkmalen des Patentanspruchs 1 bzw. ein Verfahren zum individuellen Färben von optischen Gläsern, namentlich Brillenlinsen, mit den Merkmalen des Patentanspruchs 12 gelöst. Vorteilhafte Ausgestaltungen der Erfindung sind Gegenstand der Patentansprüche 2 bis 11.

In einer Beschichtungsanlage zum individuellen Beschichten von Substraten, nämlich Brillenlinsen, die eine Vorrichtung zum Mischen und/oder Dosieren von flüssigen Beschichtungsstoffen, einen Substrathalter zum Halten der Substrate während des Beschichtens und einen Beschichtungsraum aufweist, in dem ein Flüssigkeitsausgang der Vorrichtung über eine Düse mündet, um den in der Vorrichtung gemischten und/oder dosierten flüssigen Beschichtungsstoff in Richtung des Substrathalters abzugeben, der beispielsweise als Saugkopf ausgebildet sein kann, umfasst die Vorrichtung zum Mischen und/oder Dosieren von flüssigen Beschichtungsstoffen erfindungsgemäß wenigstens einen ersten und wenigstens einen zweiten Vorratsbehälter für flüssige Ausgangsstoffe, eine Fördereinrichtung zum Ansaugen und Ausstoßen von Flüssigkeiten, einen Mischbehälter, den Flüssigkeitsausgang für gemischte und/oder dosierte flüssige Beschichtungsstoffe sowie ein dazwischen angeordnetes Mehrfachventil, wobei das Mehrfachventil in verschiedene Ventilstellungen schaltbar und angepasst ist, eine der folgenden Verbindungen herzustellen und dabei die jeweils anderen Verbindungen zu trennen: (a) Verbindung zwischen dem ersten Vorratsbehälter und der Fördereinrichtung, (b) Verbindung zwischen dem zweiten Vorratsbehälter und der Fördereinrichtung, (c) Verbindung zwischen der Fördereinrichtung und dem Mischbehälter und (d) Verbindung zwischen der Fördereinrichtung und dem Flüssigkeitsausgang.

Mit anderen Worten gesagt werden bei einer erfindungsgemäß ausgebildeten Beschichtungsanlage in der Vorrichtung zum Mischen und/oder Dosieren von flüssigen Beschichtungsstoffen alle zum Dosieren oder Mischen notwendigen Flüssigkeitsbewegungen mittels einer einzigen Fördereinrichtung zum Ansaugen und Ausstoßen von Flüssigkeiten erzeugt, die über das Mehrfachventil mit immer nur einem der oben aufgeführten Behälter oder dem Flüssigkeitsausgang verbunden werden kann, um über die jeweilige Verbindung eine Flüssigkeit anzusaugen oder eine Flüssigkeit abzugeben. Da dabei alle nicht geschalteten Verbindungen durch das Mehrfachventil getrennt bzw. gesperrt sind, werden zum Dosieren und/oder Mischen keine weiteren Ventile benötigt, so dass die Vorrichtung besonders einfach, kompakt und kostengünstig ausgestaltet werden kann.

Zudem kann eine derartige Vorrichtung besonders einfach automatisiert werden, weil lediglich das Mehrfachventil zu schalten und die Fördereinrichtung zu betätigen ist, um ein definiertes Flüssigkeitsvolumen anzusaugen oder auszustoßen.

Dass zum Mischen und/oder Dosieren nur das eine Mehrfachventil und die eine Fördereinrichtung zum Einsatz kommen, ist ferner einem schnellen Misch- bzw. Dosierprozess sowie einer guten Reproduzierbarkeit des Mischergebnisses förderlich, weil nicht eine Mehrzahl von Komponenten im Hinblick auf die Fördermengen und -zeiten aufeinander abzustimmen bzw. miteinander zu synchronisieren sind, was die Gefahr von Fehlern bei der Dosierung birgt. Darüber hinaus ist eine derart einfach aufgebaute Vorrichtung wenig störanfällig, problemlos zu reinigen und zu warten sowie mit geringem Aufwand in der Beschichtungsanlage integrierbar.

Eine räumliche Integration der Vorrichtung zum Mischen und/oder Dosieren in der Beschichtungsanlage hat insbesondere den Vorteil, dass die in der Vorrichtung gemischten flüssigen Beschichtungsstoffe direkt in der Beschichtungsanlage verwendet werden können, wodurch zusätzliche Transportschritte entfallen und Förderwege wie auch Prozesszeiten vorteilhaft verkürzt werden können. Auch kann eine gemeinsame Steuerung für die Vorrichtung zum Mischen und/oder Dosieren und die Beschichtungsanlage vorgesehen werden. Letztlich ist eine derart ausgerüstete Beschichtungsanlage besonders für eine vollautomatisierte Fertigung prädestiniert.

In der Beschichtungsanlage bildet die Düse einen definierten Abschluss des Flüssigkeitsausgangs der Vorrichtung, der für die Abgabe des flüssigen Beschichtungsstoffs auf die Substrate die Richtung vorgibt und dabei auf die Mitte des jeweiligen Substrats zielt. Die Düse kann dabei einen sich in Strömungsrichtung aufweitenden freien Querschnitt besitzen, um die Abgabe des flüssigen Beschichtungsstoffs zu vergleichmäßigen.

Nicht zuletzt ist die Vorrichtung mit ihrem vorbeschriebenen Aufbau besonders prädestiniert, flüssige Beschichtungsstoffe in sehr kleinen Mengen zu mischen bzw. zu dosieren, wie von den Erfindern im Zusammenhang mit der Einfärbung von einzelnen Brillenlinsen durchgeführte Versuche gezeigt haben.

Grundsätzlich ist es denkbar, die Fördereinrichtung pro Förderrichtung mit einer Konstantpumpe, wie z.B. einer Membran- oder Kolbenpumpe auszubilden, die in oder aus einem gemeinsamen Zwischenspeicher fördern. Bevorzugt ist indes eine Ausgestaltung, bei der die Fördereinrichtung eine Spritzenpumpe mit einem Spritzenzylinder und einem Spritzenkolben aufweist, der mittels eines Hubantriebs bezüglich des Spritzenzylinders positionierbar ist. Eine Spritzenpumpe fördert bauartbedingt in beide Richtungen, wobei eine für einen Mischprozess vorteilhafte Strömungsrichtungsumkehr einfach zu bewerkstelligen ist. Ferner lassen sich Flüssigkeiten mit einer Spritzenpumpe sehr genau dosieren. Zudem weisen Spritzenpumpen eine hohe Dichtigkeit - auch gegen Luft - auf, was einer hohen Prozesssicherheit förderlich ist. Darüber hinaus dient der Spritzenzylinder beim Fördern als Zwischenspeicher für das geförderte Flüssigkeitsvolumen, das sich in Kenntnis des Querschnitts des Spritzenzylinders und des Hubs des Spritzenkolbens einfach berechnen lässt, so dass eine separate Erfassung des geförderten Flüssigkeitsvolumens entbehrlich ist.

Prinzipiell ist es möglich, als Hubantrieb z.B. einen einfachen Kurbeltrieb einzusetzen. Auch sind Lösungen mit einem Linearmotor oder einer Kolben-Zylinder-Anordnung zur Huberzeugung denkbar. Im Hinblick auf sowohl geringe Kosten als auch insbesondere eine sehr gute Dosierbarkeit der geförderten Flüssigkeit ist es jedoch bevorzugt, wenn der Hubantrieb einen Elektromotor aufweist, der über einen Getriebemechanismus, welcher eine Drehbewegung in eine Längsbewegung umzuwandeln vermag, mit dem Spritzenkolben in Antriebsverbindung steht. Durch geeignete Wahl einer Getriebeübersetzung des Getriebemechanismus lassen sich sehr feinfühlige Bewegungen des Spritzenkolbens realisieren, so dass das zu fördernde Flüssigkeitsvolumen sehr genau eingestellt werden kann. Besonders bevorzugt kann es sich bei dem Elektromotor um einen Schrittmotor handeln, der ohne Sensor zur Positionsrückmeldung sehr genau positioniert werden kann. Je nach Schrittweite (Drehwinkel) des Schrittmotors und Auslegung der Getriebeübersetzung des Getriebemechanismus können hiermit auch sehr kleine Fördermengen gut reproduzierbar mit der Spritzenpumpe gefördert werden.

Grundsätzlich kann der Mischbehälter beliebig ausgebildet sein, z.B. eine Kugelform aufweisen. Insbesondere im Hinblick auf eine besonders gute und schnelle Vermischung der flüssigen Ausgangsstoffe zum flüssigen Beschichtungsstoff ist es allerdings bevorzugt, wenn der Mischbehälter einen Mischtrichter aufweist. Aufgrund des konstanten Übergangs von einem großen zu einem kleinen Querschnitt kommt es beim Absaugen des flüssigen Beschichtungsstoffs aus dem Mischtrichter nämlich zu einer die Vermischung begünstigenden Wirbelbildung. Dies ist auch für die Reinigung des Mischtrichters von Vorteil. Ein solcher Mischtrichter ist zudem einfach und kostengünstig zu fertigen.

Die innenliegenden, d.h. vom flüssigen Beschichtungsstoff benetzten Oberflächen des Mischtrichters können prinzipiell unbehandelt bzw. blankgeschliffen sein. In bevorzugter Ausgestaltung ist indes vorgesehen, dass die innenliegenden Oberflächen des Mischtrichters elektropoliert sind oder eine Antihaftbeschichtung - wie z.B. Teflon^{®} oder eine andere FEP-Beschichtung - aufweisen. Dies erleichtert nicht nur vorteilhaft die Reinigung des Mischtrichters, sondern verbessert auch das Mischergebnis aufgrund einer mit der erzielten geringeren Reibung einhergehenden, ausgeprägteren Wirbelbildung.

Für das Mehrfachventil sind ebenfalls verschiedene Ausgestaltungen denkbar. So kann es sich bei dem Mehrfachventil um ein Längsschieberventil oder eine Ventilinsel handeln. Insbesondere im Hinblick auf einen besonders kompakten Aufbau bevorzugt ist allerdings eine Ausgestaltung, bei der das Mehrfachventil ein Verteilergehäuse mit Anschlüssen für die Vorratsbehälter, den Mischbehälter, den Flüssigkeitsausgang und die Fördereinrichtung sowie einen im Verteilergehäuse verdrehbar aufgenommenen Ventilkörper aufweist, der einen Verbindungskanal besitzt, welcher je nach Verdrehstellung des Ventilkörpers im Verteilergehäuse den Anschluss für die Fördereinrichtung mit einem der Anschlüsse für die Vorratsbehälter, den Mischbehälter und den Flüssigkeitsausgang zu verbinden vermag. Ein derart ausgebildetes Mehrfachventil zeichnet sich nicht nur dadurch aus, dass es lediglich ein bewegliches Teil (den Ventilkörper) aufweist, sondern auch dadurch, dass es sich sehr einfach reinigen lässt, weil alle Flüssigkeiten über den gleichen Verbindungskanal im drehbaren Ventilkörper geführt werden. Darüber hinaus verfügt ein solches Mehrfachventil in vorteilhafter Weise über wenig Todvolumen, kurze Stellwege und kurze, konstante Flüssigkeitswege.

Wenngleich eine händische Verstellung des Ventilkörpers des Mehrfachventils vorgesehen sein kann, ist es bevorzugt, wenn der Ventilkörper des Mehrfachventils mittels eines Elektromotors im Verteilergehäuse verdrehbar ist, was vorteilhaft eine automatische Verstellung des Ventilkörpers ermöglicht. Als Antrieb kann hierbei z.B. ein direkt oder über eine Getriebeverbindung angeschlossener Schrittmotor zum Einsatz kommen.

In zweckmäßiger Ausgestaltung der Beschichtungsanlage kann ferner vorgesehen sein, dass jedem Vorratsbehälter der Vorrichtung zum Mischen und/oder Dosieren ein Filter zugeordnet ist, der stromaufwärts des Mehrfachventils liegt. Etwaige Verunreinigungen oder Verklumpungen der flüssigen Ausgangsstoffe können so nicht zum Mehrfachventil gelangen und dort eine Verstopfung verursachen. Hierbei können die Vorratsbehälter ggf. druckbeaufschlagt sein, so dass die flüssigen Ausgangsstoffe ohne Ziehen eines Unterdrucks durch die Filter gedrückt werden. Auch kann ein Filter zwischen dem Mehrfachventil und dem Flüssigkeitsausgang angeordnet sein, um die flüssigen Beschichtungsstoffe vor dem Beschichten zu filtern.

Um ein unbeabsichtigtes Beschichten der Substrate z.B. unmittelbar nach einer Reinigung der Vorrichtung zum Mischen und/ oder Dosieren zu verhindern, sind mehrere Maßnahmen denkbar. So können **z.B.** die Substrate mittels des Substrathalters der Beschichtungsanlage aus dem Beschichtungsraum wegbewegt werden oder die Lage der Düse wird im Beschichtungsraum so verändert, dass eine Beschichtung der Substrate ausgeschlossen ist. Insbesondere im Hinblick auf eine einfache Ausgestaltung der Beschichtungsanlage und kurze Prozesszeiten bevorzugt ist es indes, wenn der Düse im Beschichtungsraum eine Ableiteinrichtung zugeordnet ist, welche wahlweise von einer ein unbeabsichtigtes Beschichten der Substrate verhindernden Ableitposition zwischen der Düse und dem Substrathalter in eine Freigabeposition, in der sich die Ableiteinrichtung nicht zwischen der Düse und dem Substrathalter befindet, und umgekehrt bewegbar ist. Grundsätzlich kann die Ableiteinrichtung zum Abdecken der Düse z.B. einen linear bewegbaren Schieber aufweisen, der etwa mittels eines Elektromotors angetrieben wird. Zur Erzielung einer kompakten Anordnung und einer hohen Funktionssicherheit ist es allerdings bevorzugt, wenn die Ableiteinrichtung eine Klappe aufweist, die mittels eines Pneumatikzylinders verschwenkbar ist. Die Klappe kann hierbei z.B. über einen von außen in den Beschichtungsraum hineinragenden Schaft verschwenkt werden, der sich - anders als ein Führungsmechanismus bei einer Linearbewegung - leicht gegen störende Einflüsse durch ggf. aushärtende flüssige Beschichtungsstoffe schützen lässt. Ferner sind Pneumatikzylinder im Vergleich zu ebenfalls denkbaren Elektroantrieben sehr kostengünstig, auch ist Druckluft in einer Beschichtungsanlage zumeist ohnehin vorhanden.

Die vorbeschriebene Vorrichtung zum Mischen und/oder Dosieren eignet sich prinzipiell für eine Integration in einer beliebigen gattungsgemäßen Beschichtungsanlage, die flüssige Beschichtungsstoffe verwendet, d.h. einer solchen Beschichtungsanlage, die mit einem beliebigen Beschichtungsprinzip - beispielsweise Tauchbeschichten oder Tintenstrahldrucken - arbeitet. Besonders bevorzugt ist es jedoch, wenn es sich bei der Beschichtungsanlage um eine Rotationsbeschichtungsanlage handelt, die sich insbesondere durch die Möglichkeit der Erzeugung sehr gleichförmiger bzw. -mäßiger Beschichtungen sowie kurze Prozesszeiten bei der Beschichtung auszeichnet.

Im weiteren Verfolg des Erfindungsgedankens umfasst ein Verfahren zum individuellen Färben von optischen Gläsern, namentlich Brillenlinsen, bei dem insbesondere die vorbeschriebene Beschichtungsanlage Verwendung finden kann, die folgenden Verfahrensschritte: (i) Bereitstellen einer Brillenlinse oder eines Brillenlinsenpaars; (ii) Auswählen einer individuellen Farbe für die Brillenlinse oder das Brillenlinsenpaar aus einer Mehrzahl von Farben, für deren Anmischung jeweils ein Mischungsverhältnis von verschiedenen Ausgangsfarben bekannt ist; (iii) Dosieren der bereitgestellten verschiedenen Ausgangsfarben in zur Anmischung der ausgewählten individuellen Farbe entsprechend dem bekannten Mischungsverhältnis benötigten Teilmengen für eine Gesamtmenge, die zum Färben der Brillenlinse oder des Brillenlinsenpaars gerade ausreicht; (iv) Mischen der dosierten Teilmengen von Ausgangsfarben zum Gewinnen einer gemischten Gesamtmenge der ausgewählten individuellen Farbe; und (v) Beschichten der Brillenlinse oder des Brillenlinsenpaars mit der gemischten Gesamtmenge der ausgewählten individuellen Farbe.

Anders als im vorbeschriebenen Stand der Technik werden also zum Einfärben von Brillenlinsen nicht verschiedene Farbtöpfe als Tauchbäder vorgehalten, mit den hiermit verbundenen Problemen, insbesondere was die Reproduzierbarkeit bestimmter Färbungen angeht. Vielmehr erfolgt eine individuelle Anmischung der gewünschten individuellen Farbe entsprechend dem hierfür bekannten Mischungsverhältnis in Kleinstmenge, nämlich einer solchen Menge, die für die Beschichtung der jeweiligen Brillenlinse bzw. des jeweiligen Brillenlinsenpaars gerade ausreicht, und nicht mehr. Damit ist - verglichen zum Stand der Technik - problemlos und mit geringerem Aufwand eine ungleich höhere Anzahl von individuellen Farbwünschen zu realisieren. Die Reproduzierbarkeit bestimmter Farbtöne ist dabei sehr gut, weil sie nicht vom Geschick des zum Färben eingesetzten Personals und subjektiven Farbeindrücken abhängt, sondern sich objektiv aufgrund des bekannten Mischungsverhältnisses ergibt. Außerdem besteht nicht die Gefahr, dass sich die Farbe aufgrund von Umgebungseinflüssen und/oder Alterung verändert, weil die jeweilige individuelle Farbe bedarfssynchron just für den jeweiligen Beschichtungsprozess angemischt wird. Nicht zuletzt lässt sich das erfindungsgemäße Verfahren zum individuellen Färben sehr gut automatisieren, so dass es sich insbesondere zum individuellen Färben von optischen Gläsern in einem industriellen Maßstab eignet.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise schematischen Zeichnungen näher erläutert. In den Zeichnungen zeigen:

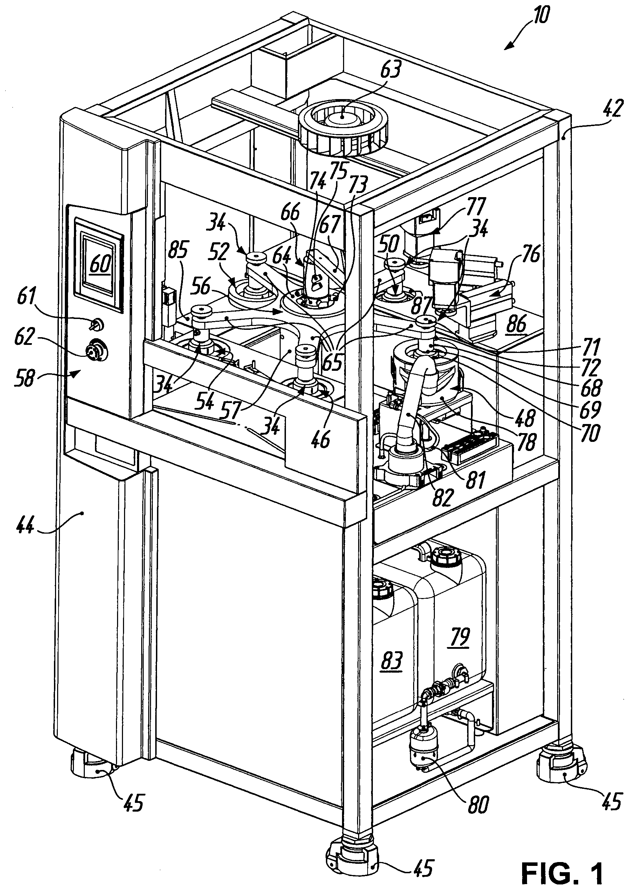

- Fig. 1: eine perspektivische Ansicht einer erfindungsgemäßen Beschichtungsanlage zum individuellen Beschichten von Substraten, namentlich Brillenlinsen, von schräg oben vorne rechts, mit einem Substrathalter zum Halten der Substrate während des Beschichtens und einer Beschichtungsstation, an die eine Vorrichtung zum Mischen und/oder Dosieren von flüssigen Beschichtungsstoffen angeschlossen ist;

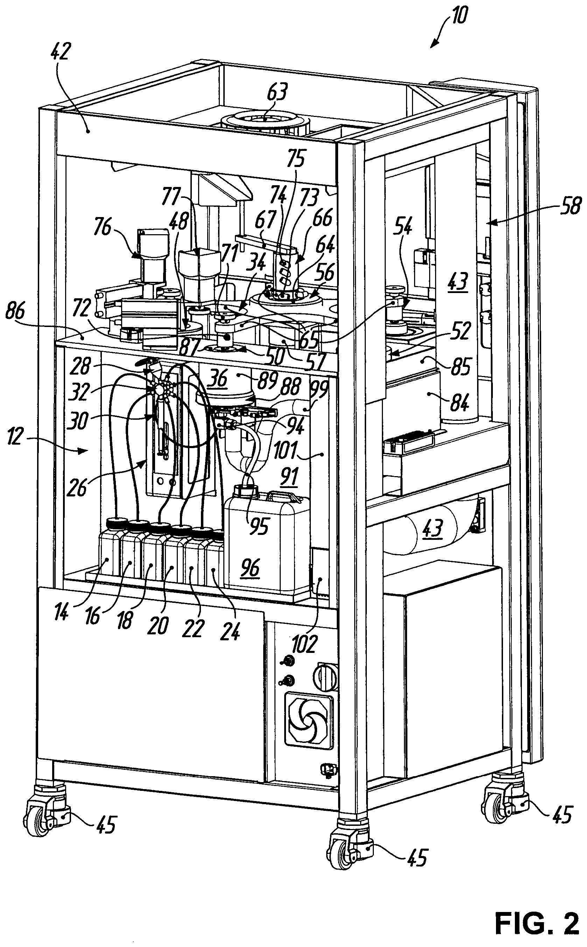

- Fig. 2: eine perspektivische Ansicht der Beschichtungsanlage gemäß Fig. 1 von schräg oben hinten links, mit Blick auf die Beschichtungsstation und die daran angeschlossene Vorrichtung zum Mischen und/oder Dosieren, die allgemein mehrere Vorratsbehälter für flüssige Ausgangsstoffe, eine Fördereinrichtung zum Ansaugen und Ausstoßen von Flüssigkeiten, einen Mischbehälter, einen in einem Beschichtungsraum der Beschichtungsstation mündenden Flüssigkeitsausgang für gemischte und/oder dosierte flüssige Beschichtungsstoffe sowie ein dazwischen angeordnetes Mehrfachventil aufweist;

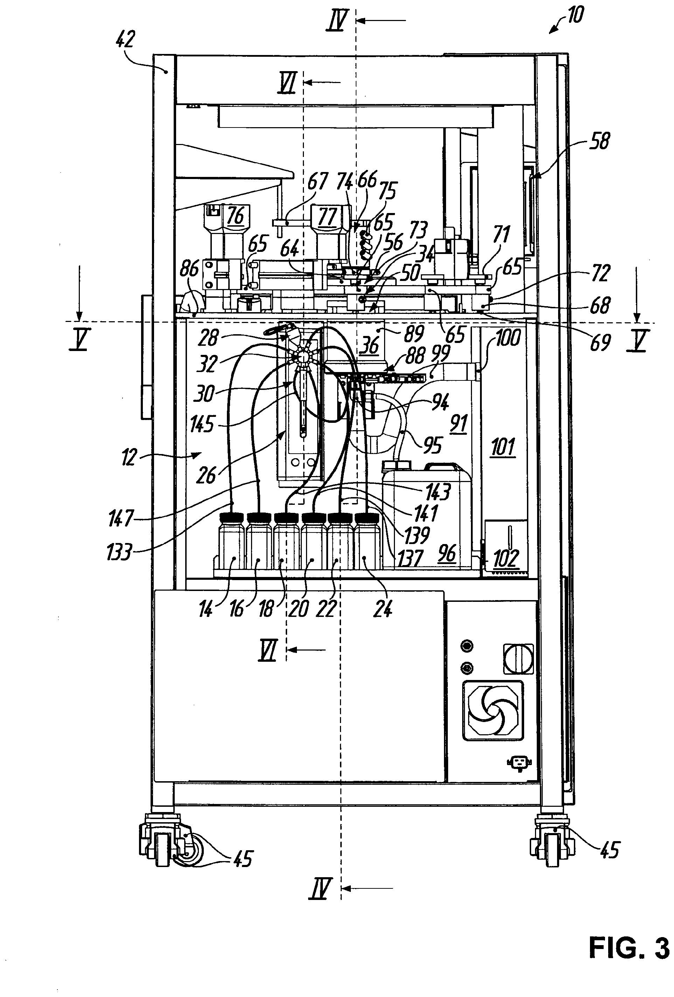

- Fig. 3: eine Rückansicht der Beschichtungsanlage gemäß Fig. 1;

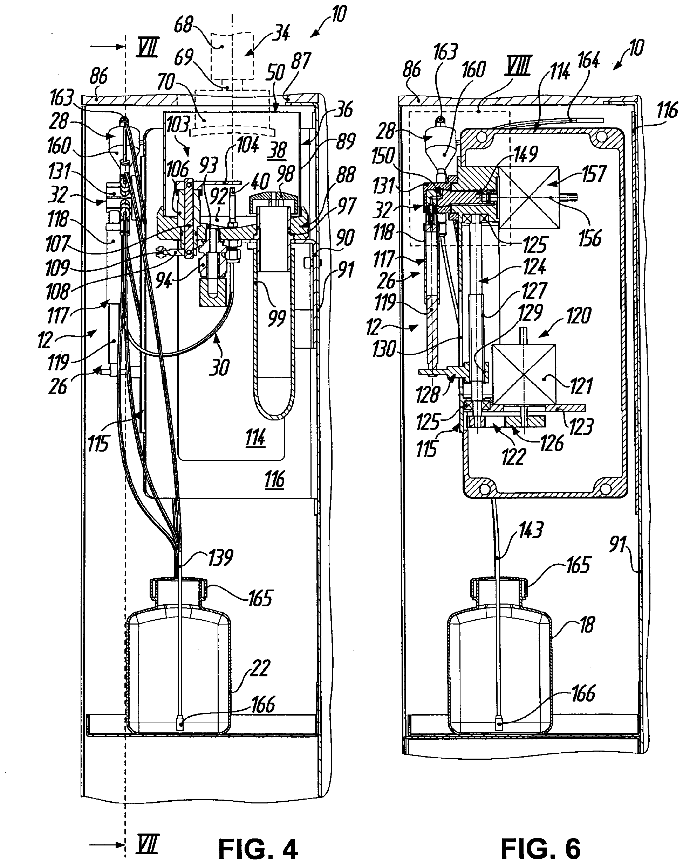

- Fig. 4: eine gegenüber dem Maßstab der Fig. 3 vergrößerte, nach oben, unten und rechts abgebrochene Schnittansicht der Beschichtungsanlage gemäß Fig. 1 entsprechend der versetzten Schnittverlaufslinie IV-IV in Fig. 3, mit Blick auf eine in dem Beschichtungsraum der Beschichtungsstation mündende, mit dem Flüssigkeitsausgang verbundene Düse der Vorrichtung zum Mischen und/oder Dosieren, wobei die Düse unterhalb einer Klappe einer Ableiteinrichtung angeordnet ist, die zwischen der Düse und einem gestrichelt dargestellten Substrat sitzt;

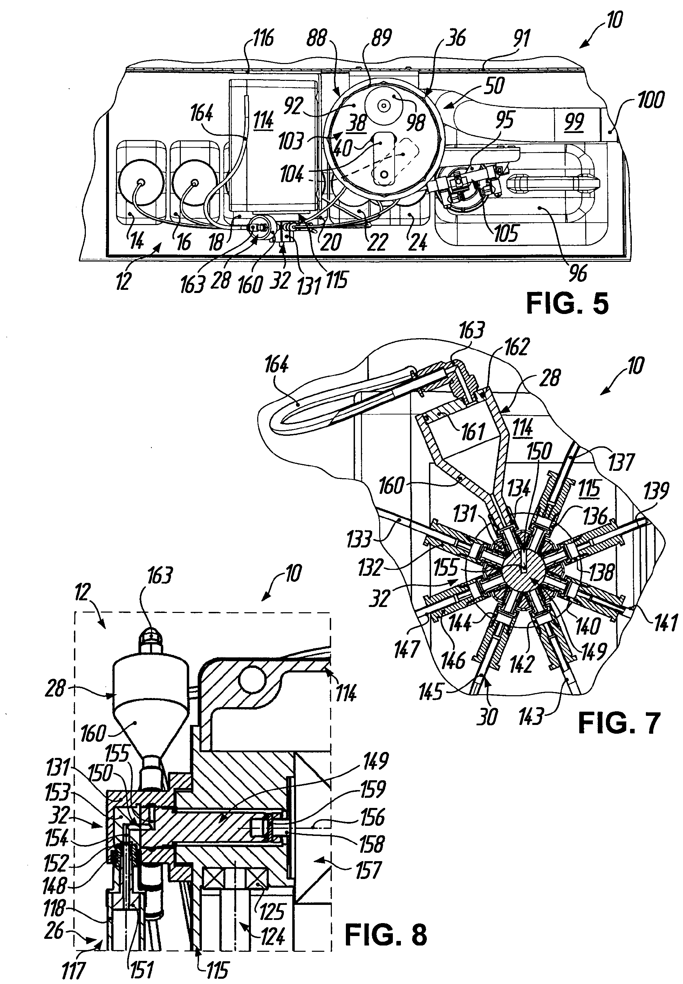

- Fig. 5: eine nach oben und beiden Seiten abgebrochene Schnittansicht der Beschichtungsanlage gemäß Fig. 1 entsprechend der Schnittverlaufslinie V-V in Fig. 3 im Maßstab der Fig. 4, mit Blick auf den Boden des Beschichtungsraums und die Klappe der Ableiteinrichtung in einer ein unbeabsichtigtes Beschichten der Substrate verhindernden Ableitposition, wobei mit gestrichelter Linie auch eine Freigabeposition der Klappe eingezeichnet ist, in der sich die Klappe nicht zwischen der Düse und dem Substrathalter befindet;
- Fig. 6: eine nach oben, unten und rechts abgebrochene Schnittansicht der Beschichtungsanlage gemäß Fig. 1 entsprechend der versetzten Schnittverlaufslinie VI-VI in Fig. 3 im Maßstab der Fig. 4, der weitere Details zu der Fördereinrichtung und dem Mehrfachventil der Vorrichtung zum Mischen und/oder Dosieren zu entnehmen sind;
- Fig. 7: eine gegenüber dem Maßstab der Fig. 4 vergrößerte, insgesamt abgebrochene Schnittansicht der Beschichtungsanlage gemäß Fig. 1 entsprechend der Schnittverlaufslinie VII-VII in Fig. 4, zur Veranschaulichung weiterer Einzelheiten des Mehrfachventils und des Mischbehälters der Vorrichtung zum Mischen und/oder Dosieren;
- Fig. 8: eine im Maßstab vergrößerte Darstellung des Details VIII in Fig. 6;

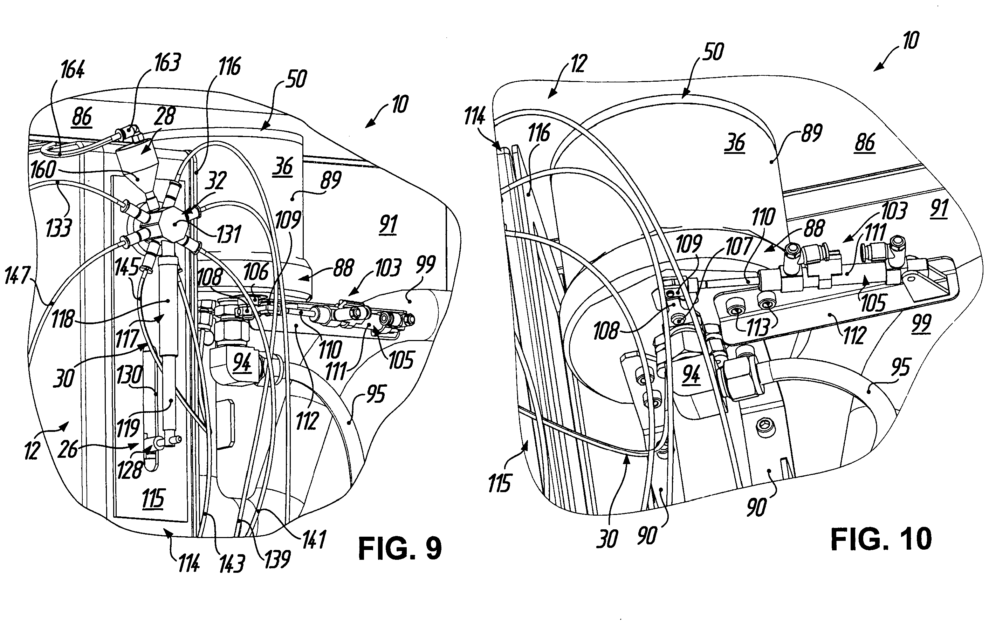

- Fig. 9: eine gegenüber dem Maßstab der Fig. 2 vergrößerte, insgesamt abgebrochene perspektivische Ansicht der Beschichtungsanlage gemäß Fig. 1 von schräg hinten unten rechts, mit Blick auf insbesondere das Mehrfachventil und die als Spritzenpumpe ausgebildete Fördereinrichtung der Vorrichtung zum Mischen und/oder Dosieren;
- Fig. 10: eine gegenüber dem Maßstab der Fig. 2 vergrößerte, insgesamt abgebrochene perspektivische Ansicht der Beschichtungsanlage gemäß Fig.1 von schräg hinten unten links, mit Blick auf insbesondere einen Pneumatikzylinder zum Verschwenken der Klappe der Ableiteinrichtung; und

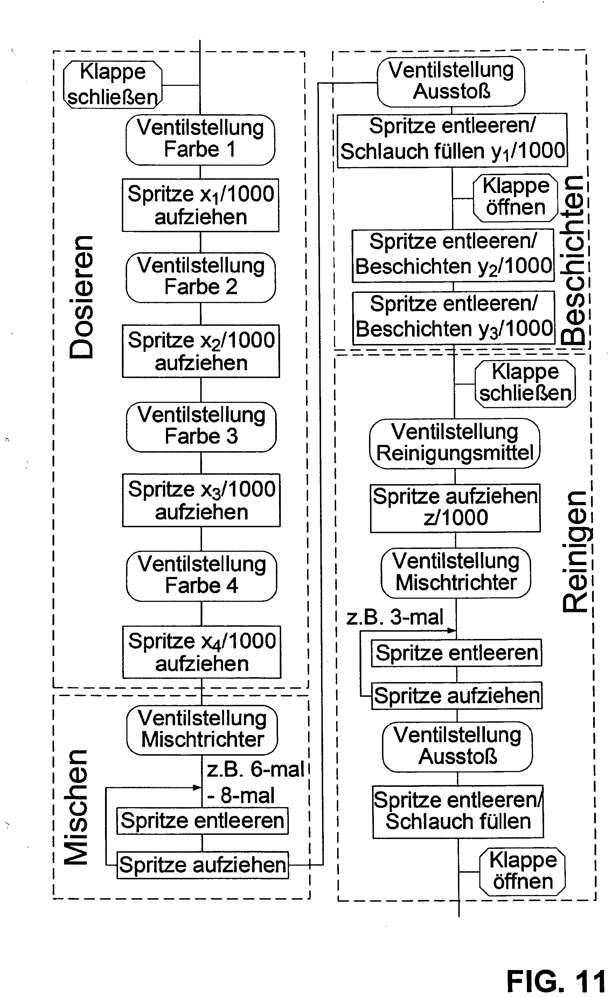

- Fig. 11: ein Ablaufdiagramm, welches die einzelnen, mit der Vorrichtung zum Mischen und/oder Dosieren der erfindungsgemäßen Beschichtungsanlage verbundenen Prozessschritte wiedergibt, die beim individuellen Färben einer Brillenlinse in der Beschichtungsanlage gemäß Fig. 1 nacheinander durchlaufen werden.

Zu den Zeichnungen sei an dieser Stelle noch angemerkt, dass zur Freigabe der Sicht auf wesentliche Bauteile bzw. Baugruppen der erfindungsgemäßen Beschichtungsanlage und der Vorrichtung zum Mischen und/oder Dosieren sowie zur Vereinfachung der Darstellung insbesondere Teile der Verkleidung, Türen, Ablagen für Werkstücke und Betriebsstoffe, die Versorgungseinrichtungen (einschließlich Leitungen, Schläuche und Rohre) für Strom und Druckluft sowie die Mess-, Wartungs- und Sicherheitseinrichtungen zumeist weggelassen wurden, weil sie für das Verständnis der Erfindung nicht erforderlich erscheinen und dem Fachmann ohnehin geläufig sind.

### DETAILLIERTE BESCHREIBUNG DES AUSFÜHRUNGSBEISPIELS

In den Fig. 1 bis 10 ist beispielhaft für eine Beschichtungsanlage 10 zum individuellen Beschichten von Substraten, nämlich Brillenlinsen L, eine Rotationsbeschichtungsanlage dargestellt, in der gemäß den Fig. 2 bis 10 eine nachfolgend noch näher beschriebene Vorrichtung zum Mischen und/oder Dosieren von flüssigen Beschichtungsstoffen - im Folgenden kurz Mischvorrichtung 12 genannt - integriert ist.

Die Mischvorrichtung 12 umfasst allgemein wenigstens einen ersten (14, 16) und wenigstens einen zweiten (18, 20, 22, 24) Vorratsbehälter für flüssige Ausgangsstoffe (Lösungsmittel sowie klare und verschiedenfarbige Primer), wobei im dargestellten Ausführungsbeispiel insgesamt sechs Vorratsbehälter 14, 16, 18, 20, 22, 24 für - in den Fig. 2 und 3 von links nach rechts gesehen - Lösungsmittel (Vorratsbehälter 14), klare Grundierung (Vorratsbehälter 16), schwarz eingefärbte Grundierung (Vorratsbehälter 18), blau eingefärbte Grundierung (Vorratsbehälter 20), rot eingefärbte Grundierung (Vorratsbehälter 22) und gelb eingefärbte Grundierung (Vorratsbehälter 24) vorgesehen sind. Ferner hat die Mischvorrichtung 12 eine insbesondere in Fig. 6 gezeigte Fördereinrichtung 26 zum Ansaugen und Ausstoßen von Flüssigkeiten, einen insbesondere in Fig. 7 dargestellten Mischbehälter 28 sowie einen am besten in Fig. 4 zu erkennenden Flüssigkeitsausgang 30 für gemischte und/oder dosierte flüssige Beschichtungsstoffe. Dazwischen ist ein allgemein mit dem Bezugszeichen 32 beziffertes Mehrfachventil angeordnet (siehe insbesondere die Fig. 6 bis 8), das in verschiedene Ventilstellungen geschaltet werden kann und - wie im Folgenden ebenfalls noch detailliert erläutert werden wird - angepasst ist, jede der folgenden Verbindungen (a, b, c, d) herzustellen und dabei die jeweils anderen Verbindungen zu trennen: (a) Verbindung zwischen dem jeweiligen ersten Vorratsbehälter 14 oder 16 und der Fördereinrichtung 26, (b) Verbindung zwischen dem jeweiligen zweiten Vorratsbehälter 18, 20, 22 oder 24 und der Fördereinrichtung 26, (c) Verbindung zwischen der Fördereinrichtung 26 und dem Mischbehälter 28 und (d) Verbindung zwischen der Fördereinrichtung 26 und dem Flüssigkeitsausgang 30, im hier gezeigten Ausführungsbeispiel also insgesamt acht verschiedene Verbindungen.

Zum Zusammenwirken von Mischvorrichtung 12 und Beschichtungsanlage 10 sei an dieser Stelle vorab noch erwähnt, dass die Beschichtungsanlage 10 allgemein mehrere Substrathalter 34 zum Halten der Brillenlinsen L (u.a.) während des Beschichtens und einen durch eine Beschichtungsschüssel 36 (sogenannte "Coating Bowl") begrenzten Beschichtungsraum 38 aufweist, in dem gemäß Fig. 4 der Flüssigkeitsausgang 30 der Mischvorrichtung 12 über eine Düse 40 mündet, um den in der Mischvorrichtung 12 gemischten und/oder dosierten flüssigen Beschichtungsstoff in Richtung des Substrathalters 34 abzugeben.

Gemäß den Fig. 1 bis 3 hat die Beschichtungsanlage 10 einen Rahmen 42, der die verschiedenen Komponenten der Beschichtungsanlage 10 trägt und umgibt und hierfür eine Mehrzahl von Trägern und Streben umfasst, die in einer kastenartigen Konfiguration miteinander verbunden sind. An dem Rahmen 42 sind rundherum Verkleidungsteile befestigt, die verhindern, dass Verunreinigungen in das Innere der Beschichtungsanlage 10 gelangen können, welches im Betrieb der Beschichtungsanlage 10 unter einem leichten Unterdruck steht, der durch ein im Bodenbereich der Beschichtungsanlage 10 vorgesehenes Gebläse erzeugt wird, das in den Figuren selbst nicht dargestellt ist. In Fig. 2 sind allerdings Abluftrohre 43 gezeigt, die mit diesem Gebläse verbunden sind. Auch die vorerwähnten Verkleidungsteile sind in den Figuren zumeist weggelassen, um den Blick in das Innere der Beschichtungsanlage 10 freizugeben. Beispielhaft für diese Verkleidungsteile ist in Fig. 1 eine Frontplatte 44 gezeigt, die einen Teil der Vorderseite des Rahmens 42 abdeckt.

Der Rahmen 42 ist ferner auf seiner Unterseite an allen vier Ecken mit höhenverstellbaren Rollfüßen 45 versehen, über welche die Beschichtungsanlage 10 zum einen einfach und sicher bewegt werden kann. Zum anderen sorgen die Rollfüße 45 am jeweiligen Installationsort für einen stabilen Stand der Beschichtungsanlage 10 und ermöglichen eine exakte Höhenjustage, insbesondere um die Beschichtungsanlage 10 für einen problemlosen Schleuderbeschichtungsvorgang (sogenanntes "Spin Coating") zu nivellieren, d.h. in die Waage zu bringen.

Innerhalb des Rahmens 42 umfasst die Beschichtungsanlage 10 eine Anzahl von Arbeitsstationen zum Ausführen einer oder mehrerer Operationen an den Brillenlinsen L. Zunächst ist eine Ladestation 46 vorgesehen, über die die Brillenlinsen L in die Beschichtungsanlage 10 geladen werden. Das Bezugszeichen 48 beziffert eine Waschstation, in der die Brillenlinsen L gewaschen und getrocknet werden. Bei dem Bezugszeichen 50 umfasst die Beschichtungsanlage 10 eine Beschichtungsstation mit der Beschichtungsschüssel 36, in der die Beschichtung auf den Brillenlinsen L mittels Schleuderbeschichtung aufgetragen wird. Hierauf folgt eine Härtungsstation 52 zum Trocknen und Härten der auf den Brillenlinsen L aufgebrachten Beschichtung mittels UV-Bestrahlung. Schließlich ist eine Entladestation 54 vorgesehen, über die die fertiggestellten Brillenlinsen L aus der Beschichtungsanlage 10 heraustransportiert werden.

Für den Transport der Brillenlinsen L von Arbeitsstation zu Arbeitsstation weist die Beschichtungsanlage 10 ein nachfolgend noch näher beschriebenes Karussell 56 auf, das zum einen mittels eines unterhalb des Karussells 56 angeordneten Drehantriebs 57 um eine vertikal verlaufende Rotationsachse verdreht werden kann. Zum anderen kann das Karussell 56 mittels eines in den Figuren nicht dargestellten, vorzugsweise pneumatischen oder hydraulischen Hubmechanismus entlang der Rotationsachse angehoben und abgesenkt werden.

Der Betrieb des Karussells 56 und der einzelnen Arbeitsstationen 46, 48, 50, 52 und 54 wie auch der integrierten Mischvorrichtung 12 wird durch eine zentrale Steuereinheit 58 gesteuert. Gemäß Fig. 1 umfasst die Steuereinheit 58 einen Touchscreen 60 für die Eingabe von Bedienparametern und die Anzeige von Statusinformationen der Beschichtungsanlage 10. Als weitere Bedienelemente der Steuereinheit 58 sind in Fig. 1 ein Ein-/Ausschalter 61 und ein Notausschalter 62 dargestellt.

Um eine saubere Umgebung innerhalb der Beschichtungsanlage 10 aufrechtzuerhalten und damit insbesondere zu vermeiden, dass Partikel in das Innere der Beschichtungsanlage 10 gelangen können, die zu einer Verunreinigung der beschichteten Brillenlinsen L führen könnten, ist gemäß den Fig. 1 und 2 auf der Oberseite des Rahmens 42 an zentraler Stelle ein Zentrifugalgebläse 63 angebracht, das zur Luftreinigung mit einem unterhalb des Zentrifugalgebläses 63 angeordneten Schwebstofffilter vom HEPA-Typ (nicht gezeigt) zusammenwirkt, so dass - auch bedingt durch den im Inneren der Beschichtungsanlage 10 anstehenden Unterdruck (siehe oben) - partikelfreie Luft im Inneren der Beschichtungsanlage 10 zirkuliert wird.

Wie den Fig. 1 und 2 des Weiteren zu entnehmen ist, weist das Karussell 56 einen inneren Nabenabschnitt 64 auf, von dem sich entsprechend der Anzahl der Arbeitsstationen 46, 48, 50, 52, 54 insgesamt fünf gleich lange Arme 65 wegerstrecken, die um den Nabenabschnitt 64 gleichmäßig voneinander winkelbeabstandet sind. Oberhalb des Nabenabschnitts 64 des Karussells 56 ist eine Drehdurchführung 66 angeordnet, die ihrerseits an einem oberen, feststehenden Teil über ein als Drehmomentstütze wirkendes Rahmenbefestigungselement 67 gegenüber dem Rahmen 42 abgestützt ist.

An den vom Nabenabschnitt 64 abgewandten, freien Enden der Arme 65 des Karussells 56 ist an jedem Arm 65 einer der Substrathalter 34 angebracht. Genauer gesagt umfasst jeder Substrathalter 34 gemäß insbesondere den Fig. 1 (rechte Seite), 3 (rechte Seite) und 4 (in gestrichelten Linien) einen Gehäuseabschnitt 68, der mit dem freien Ende des jeweiligen Arms 65 fest verbunden ist. In dem Gehäuseabschnitt 68 ist eine Antriebswelle 69 drehbar gelagert. An einem unteren Ende jeder Antriebswelle 69 ist ein von einem Spritzschutz umgebener, in den Figuren lediglich schematisch dargestellter gummielastischer Saugnapf 70 befestigt. An einem oberen, sich durch den jeweiligen Arm 65 erstreckenden Ende jeder Antriebswelle 69 hingegen ist eine scheibenförmige Magnetkupplung 71 angebracht.

Das Bezugszeichen 72 beziffert in den Fig. 1 bis 3 einen an jedem Gehäuseabschnitt 68 vorgesehenen Unterdruckanschluss, über den ein Unterdruck am jeweiligen Saugnapf 70 angelegt werden kann, um die Brillenlinse L in an sich bekannter Weise anzusaugen und zu halten (vgl. Fig. 4). Die Unterdruckanschlüsse 72 sind über in den Figuren nicht gezeigte Unterdruckschläuche an zugeordneten Unterdruckanschlüssen 73 eines mit dem Karussell 56 drehbaren Verteilerabschnitts 74 der Drehdurchführung 66 angeschlossen. Der Verteilerabschnitt 74 ist seinerseits über Unterdruckanschlüsse 75 an dem oberen, feststehenden Teil der Drehdurchführung 66 mit einer Unterdruckquelle (nicht dargestellt) verbunden.

Der Waschstation 48 und der Beschichtungsstation 50 ist ferner jeweils eine Drehantriebsanordnung 76 bzw. 77 zugeordnet, die angepasst ist, mit den Magnetkupplungen 71 der Substrathalter 34 zusammenzuwirken, und in an sich bekannter Weise dazu dient, die Antriebswelle 69 des jeweiligen Substrathalters 34 über die Magnetkupplung 71 drehend anzutreiben, wenn sich der jeweilige Substrathalter 34 an der Waschstation 48 bzw. der Beschichtungsstation 50 befindet.

Für den Fachmann ist hinsichtlich der substratseitigen Kinematik der Beschichtungsanlage 10 insoweit ersichtlich, dass die zu beschichtenden Brillenlinsen L mittels der Saugnäpfe 70 durch Unterdruck an den Substrathaltern 34 gehalten werden können, die ihrerseits über ein Verdrehen des Karussells 56 von Arbeitsstation zu Arbeitsstation bewegbar sind und durch eine Hubbewegung des Karussells 56 in die jeweilige Arbeitsstation abgesenkt und aus der jeweiligen Arbeitsstation herausgehoben werden können. Darüber hinaus können die an den Substrathaltern 34 gehaltenen Brillenlinsen L in der Waschstation 48 und der Beschichtungsstation 50 mittels der Drehantriebsanordnung 76 bzw. 77 über die jeweilige Magnetkupplung 71 um ihre eigene Achse gedreht werden.

Zur Waschstation 48 ist der Fig. 1 noch zu entnehmen, dass die Waschstation 48 einen Waschbehälter 78 umfasst, in dem die drehend angetriebenen Brillenlinsen L mit einem Waschwasser gewaschen werden. Das Waschwasser wird dabei aus einem unterhalb der Waschstation 48 angeordneten Behälter 79 für Waschwasser über einen Filter 80 von einer Pumpe (nicht gezeigt) durch einen Waschwasserzufuhrschlauch 81 in den Waschbehälter 78 gefördert. Ferner sind in Fig. 1 von der Waschstation 48 noch eine an den Waschbehälter 78 angeschlossene Absaugung 82 und ein Behälter 83 für Abwasser zu sehen.

Die Fig. 2 zeigt zunächst von der Härtungsstation 52 noch einen Lichtkasten 84, der mittels einer Abdeckung 85 abgedeckt ist. Die Abdeckung 85 besitzt gemäß Fig. 1 auf ihrer Oberseite eine Öffnung, durch die die am Substrathalter 34 gehaltenen Brillenlinsen L über das Karussell 56 in den Lichtkasten 84 abgesenkt werden können. In dem Lichtkasten 84 ist eine UV-Lampe (nicht gezeigt) angeordnet, die dazu dient, die auf den Brillenlinsen L in der Beschichtungsstation 50 aufgebrachte Beschichtung zu bestrahlen und auszuhärten. Ggf. kann auch an der Härtungsstation 52 eine Drehantriebsanordnung (hier nicht dargestellt) vorgesehen sein, um die Brillenlinsen L beim Aushärten der Beschichtung über die Magnetkupplung 71 des jeweiligen Substrathalters 34 zu drehen. Das Aushärten kann ferner in einer inerten Atmosphäre (CO₂ oder N₂) erfolgen.

Bevor nunmehr weitere Einzelheiten der Beschichtungsstation 50 anhand der Fig. 2 bis 5, 9 und 10 beschrieben werden sollen, sei an dieser Stelle angemerkt, dass weitere Details zum Aufbau und zur Funktion der insoweit beschriebenen Beschichtungsanlage 10 der Druckschrift US 2008/0035053 A1 zu entnehmen sind, auf die an dieser Stelle ausdrücklich verwiesen wird.

Wie am besten in Fig. 4 zu sehen ist, ist die unterhalb einer horizontalen Trennwand 86 angeordnete Beschichtungsschüssel 36 der Beschichtungsstation 50 von oben durch eine Öffnung 87 in der Trennwand 86 zugänglich. Die am Saugnapf 70 des jeweiligen Substrathalters 34 gehaltene Brillenlinse L kann also wahlweise vermittels des Karussells 56 durch die Öffnung 87 hindurch in die Beschichtungsschüssel 36 abgesenkt werden, wie in Fig. 4 gezeigt, um der Düse 40 der Mischvorrichtung 12 gegenüberzuliegen.

Die Beschichtungsschüssel 36 umfasst allgemein einen Bodenabschnitt 88 und einen daran befestigten, hohlzylindrischen Wandabschnitt 89, die zusammen den Beschichtungsraum 38 nach unten bzw. seitlich begrenzen. Der Bodenabschnitt 88 der Beschichtungsschüssel 36 ist über zwei Befestigungswinkel 90 (siehe auch Fig. 10) an einer vertikalen Trennwand 91 der Beschichtungsanlage 10 montiert. Auf seiner Oberseite ist der Bodenabschnitt 88 der Beschichtungsschüssel 36 mit einer im Wesentlichen kegeligen Aussparung 92 versehen, die im Bodenabschnitt 88 eine wannenartige Vertiefung bildet, an deren tiefsten Punkt ein Ablauf 93 ausgebildet ist. Der stets offene Ablauf 93 ist über einen Anschlusswinkel 94 mit einem Ablaufschlauch 95 verbunden, der zu einem neben dem Vorratsbehälter 24 angeordneten Abfallbehälter 96 für flüssige Abfallstoffe führt.

Gemäß Fig. 4 ist ferner in einer Durchgangsbohrung im Bodenabschnitt 88 der Beschichtungsschüssel 36 ein Rohrstück 97 einer Absaugung für Lösungsmitteldämpfe geeignet abgedichtet befestigt, das sowohl nach oben als auch nach unten über den Bodenabschnitt 88 vorsteht. Von oben ist auf das Rohrstück 97 eine Kappe 98 aufgesetzt, die gemäß Fig. 4 das Rohrstück 97 nach oben abdeckt, gleichwohl zum Rohrstück 97 einen freien Querschnitt für den Durchtritt der Lösungsmitteldämpfe belässt. Von unten ist auf das Rohrstück 97 ein Absaugschlauch 99 mit einem Ende aufgesteckt. Das andere Ende des Absaugschlauchs 99 ist über einen Stutzen 100 an einem Abzugsschacht 101 angeschlossen, wie am besten in Fig. 3 zu sehen ist, der seinerseits mit dem vorerwähnten Gebläse (nicht gezeigt) im Bodenbereich der Beschichtungsanlage 10 kommuniziert. Ein in einem unteren Bereich des Abzugsschachts 101 vorgesehener Schieber 102 ermöglicht eine Änderung des Unterdrucks im Abzugsschacht 101, worüber auf eine Dicke der in der Beschichtungsschüssel 36 aufgebrachten Beschichtung Einfluss genommen werden kann.

Wie ferner insbesondere den Fig. 4 und 5 zu entnehmen ist, ist der Düse 40 im Beschichtungsraum 38 der Beschichtungsschüssel 36 eine Ableiteinrichtung 103 zugeordnet, welche wahlweise von einer ein unbeabsichtigtes Beschichten der Brillenlinsen L verhindernden Ableitposition zwischen der Düse 40 und dem Substrathalter 34 in eine Freigabeposition, in der sich die Ableiteinrichtung 103 nicht zwischen der Düse 40 und dem Substrathalter 34 befindet, und umgekehrt bewegt werden kann. Im dargestellten Ausführungsbeispiel weist die Ableiteinrichtung 103 eine Klappe 104 auf, die mittels eines Pneumatikzylinders 105 verschwenkt werden kann, der am besten in den Fig. 9 und 10 zu sehen ist.

Genauer gesagt ist gemäß Fig. 4 in einer in dem Bodenabschnitt 88 der Beschichtungsschüssel 36 neben dem Ablauf 93 ausgebildeten Stufenbohrung ein Lagerrohr 106 der Ableiteinrichtung 103 geeignet abgedichtet befestigt, das einen zylinderförmigen Verbindungsbolzen 107 drehbar aufnimmt, der zu beiden Seiten über das Lagerrohr 106 vorsteht. An dem in den Beschichtungsraum 38 vorstehenden Ende des Verbindungsbolzens 107 ist die in einer Draufsicht gesehen (vgl. Fig. 5) im Wesentlichen rechteckige, aus einer Aluminiumlegierung bestehende Klappe 104 geeignet befestigt, z.B. mittels einer Stiftverbindung. An dem über das Lagerrohr 106 nach unten vorstehenden Ende des Verbindungsbolzens 107 hingegen ist, wie insbesondere die Fig. 9 und 10 zeigen, ein Hebel 108 mit einem Ende geeignet angebracht, beispielsweise wiederum mittels einer Stiftverbindung. An seinem anderen Ende ist der Hebel 108 verschwenkbar mit einem Gabelkopf 109 verbunden, wie am besten in Fig. 10 zu sehen ist, der an einer Kolbenstange 110 des zweiseitig beaufschlagbaren Pneumatikzylinders 105 befestigt ist, die aus einem Zylindergehäuse 111 des Pneumatikzylinders 105 vorsteht. An dem von dem Gabelkopf 109 abgewandten Ende des Zylindergehäuses 111 ist das Zylindergehäuse 111 verschwenkbar an einem Halter 112 angelenkt, der seinerseits bei dem Bezugszeichen 113 in Fig. 10 von unten an dem Bodenabschnitt 88 der Beschichtungsschüssel 36 angeschraubt ist.

Für den Fachmann ist ersichtlich, dass die Klappe 104 durch geeignete pneumatische Beaufschlagung des Pneumatikzylinders 105 aus ihrer in Fig. 5 mit durchgezogener Linie eingezeichneten Ableitposition über der Düse 40 in ihre in Fig. 5 mit gestrichelter Linie eingezeichnete Freigabeposition neben der Düse 40 und umgekehrt verschwenkt werden kann. Ein am Pneumatikzylinder 105 vorgesehener Näherungssensor (nicht gezeigt) kann hierbei Auskunft über die jeweilige Position der Klappe 104 geben.

Weitere Einzelheiten der Mischvorrichtung 12 sind insbesondere den Fig. 6 bis 9 zu entnehmen. Wie zunächst am besten die Fig. 6 zeigt, besitzt die Mischvorrichtung 12 ein eigenes Gehäuse 114 mit einer vorderen, d.h. in Fig. 6 linken Öffnung, an der eine Flanschplatte 115 als Träger für die Fördereinrichtung 26, den Mischbehälter 28 und das Mehrfachventil 32 angeflanscht ist. Das Gehäuse 114 selbst ist gemäß insbesondere Fig. 5 mittels eines Winkelblechs 116 an der vertikalen Trennwand 91 der Beschichtungsanlage 10 angebracht.

Wie ferner insbesondere die Fig. 6 zeigt, weist die Fördereinrichtung 26 eine Spritzenpumpe 117 mit einem Spritzenzylinder 118 und einem Spritzenkolben 119 auf, der mittels eines Hubantriebs 120 bezüglich des Spritzenzylinders 118 positioniert werden kann. Der Hubantrieb 120 hat einen Elektromotor 121, der über einen Getriebemechanismus 122, welcher eine Drehbewegung in eine Längsbewegung umzuwandeln vermag, mit dem Spritzenkolben 119 in Antriebsverbindung steht.

Genauer gesagt ist der Elektromotor 121 an einem Flanschabschnitt 123 des Gehäuses 114 angeflanscht. Eine Gewindespindel 124 des Getriebemechanismus 122 ist zwischen dem Flanschabschnitt 123 des Gehäuses 114 und der Flanschplatte 115 mittels einer Wälzlager 125 umfassenden Loslager-Festlager-Anordnung drehbar gelagert. Der Elektromotor 121 steht über einen Riementrieb 126 des Getriebemechanismus 122 mit der Gewindespindel 124 in Antriebsverbindung. Auf einem Außengewindeabschnitt 127 der Gewindespindel 124 sitzt ein Betätigungsarm 128, der an einem augenartigen Ende einen mit dem Außengewindeabschnitt 127 in Eingriff stehenden Innengewindeabschnitt 129 aufweist. Der Betätigungsarm 128 erstreckt sich geeignet geführt durch einen in der Flanschplatte 115 ausgebildeten Längsschlitz 130 hindurch und ist mit seinem vom Innengewindeabschnitt 129 abgewandten Ende an einem in Fig. 6 unteren Ende des Spritzenkolbens 119 befestigt.

Für den Fachmann ist ersichtlich, dass die Gewindespindel 124 mittels des Elektromotors 121 über den Riementrieb 126 drehend angetrieben werden kann. Infolge des Gewindeeingriffs zwischen dem Außengewindeabschnitt 127 der Gewindespindel 124 und dem Innengewindeabschnitt 129 des gegen ein Verdrehen um die Gewindespindel 124 geführten Betätigungsarms 128 bewegt sich der Betätigungsarm 128 in Fig. 6 je nach Drehrichtung des Elektromotors 121 nach oben bzw. nach unten. Folglich wird der mit dem Betätigungsarm 128 verbundene, vorzugsweise aus Borosilikatglas bestehende und ebenfalls bevorzugt mit einer PTFE-Beschichtung versehene Spritzenkolben 119 in den aus Glas bestehenden Spritzenzylinder 118 verschoben, um je nach Verschieberichtung entweder Flüssigkeit aus dem Spritzenzylinder 118 zu verdrängen oder Flüssigkeit in den Spritzenzylinder 118 hineinzusaugen. Der Spritzenzylinder 118 kann dabei z.B. ein Fassungsvermögen von 5 ml aufweisen.

Was des Weiteren die Ausbildung des Mehrfachventils 32 angeht, ist insbesondere den Fig. 3 und 6 bis 8 zu entnehmen, dass das Mehrfachventil 32 ein an der Flanschplatte 115 angeflanschtes Verteilergehäuse 131 mit insgesamt neun Anschlüssen aufweist. Hierbei handelt es sich zunächst in sternartiger Anordnung im Uhrzeigersinn in Fig. 7 um (1.) einen Anschluss 132 für einen Schlauch 133 zu dem Vorratsbehälter 14, (2.) einen Anschluss 134 für den Mischbehälter 28, (3.) einen Anschluss 136 für einen Schlauch 137 zu dem Vorratsbehälter 24, (4.) einen Anschluss 138 für einen Schlauch 139 zu dem Vorratsbehälter 22, (5.) einen Anschluss 140 für einen Schlauch 141 zu dem Vorratsbehälter 20, (6.) einen Anschluss 142 für einen Schlauch 143 zu dem Vorratsbehälter 18, (7.) einen Anschluss 144 für einen zur Düse 40 in der Beschichtungsschüssel 36 führenden Ausstoßschlauch 145 des Flüssigkeitsausgangs 30 und (8.) einen Anschluss 146 für einen Schlauch 147 zu dem Vorratsbehälter 16 sowie - der gemeinsamen Ebene dieser Anschlüsse 132, 134, 136, 138, 140, 142, 144, 146 gemäß den Fig. 4, 6 und 8 vorgelagert - (9.) einen Anschluss 148 für den Spritzenzylinder 118 der Spritzenpumpe 117. Ferner weist das Mehrfachventil 32 einen im Verteilergehäuse 131 verdrehbar aufgenommenen Ventilkörper 149 auf und besitzt einen Verbindungskanal 150, welcher je nach Verdrehstellung des Ventilkörpers 149 im Verteilergehäuse 131 den Anschluss 148 für den Spritzenzylinder 118 der Fördereinrichtung 26 mit jeweils nur einem der Anschlüsse 132, 134, 136, 138, 140, 142, 144, 146 für die Vorratsbehälter 14, 16, 18, 20, 22, 24, den Mischbehälter 28 bzw. den Flüssigkeitsausgang 30 verbindet.

Gemäß Fig. 8 ist der Spritzenzylinder 118 der Spritzenpumpe 117 über ein Anschlussstück 151 unter Zuhilfenahme einer Dichtung 152 direkt mit dem vorderen Anschluss 148 des Verteilergehäuses 131 verbunden, der zu einem im Verteilergehäuse 131 fest angeordneten Verbindungsstück 153 führt. In Fig. 8 ist ferner zu erkennen, dass der Verbindungskanal 150 zwei Winkelabschnitte 154, 155 aufweist, nämlich einen Winkelabschnitt 154 in dem drehfesten Verbindungsstück 153 und einen Winkelabschnitt 155 in dem im Wesentlichen zylindrischen Ventilkörper 149, wobei die Winkelabschnitte 154, 155 auf einer Drehachse 156 des Ventilkörpers 149 ineinander münden. Durch Verdrehen des Ventilkörpers 149 um die Drehachse 156 wird das radial verlaufende Ende des Winkelabschnitts 155 im Ventilkörper 149 mit dem jeweiligen Anschluss 132, 134, 136, 138, 140, 142, 144, 146 ausgefluchtet, um die entsprechende Verbindung herzustellen und zugleich die anderen Verbindungen in dieser Ebene zu trennen. Der Anschluss 148 für die Fördereinrichtung 26 hingegen bleibt stets mit dem Verbindungskanal 150 verbunden.

Wie die Fig. 6 und 8 weiterhin zeigen, ist der Ventilkörper 149 des Mehrfachventils 32 mittels eines Elektromotors 157 im Verteilergehäuse 131 um die Drehachse 156 verdrehbar, so dass die jeweiligen Verbindungen automatisiert hergestellt werden können. Der Elektromotor 157 ist auf einer Innenseite des Gehäuses 114 an der Flanschplatte 115 angeflanscht und mit einer Abtriebswelle 158 über einen Querstift 159 mit dem Ventilkörper 149 des Mehrfachventils 32 antriebsverbunden.

Gemäß insbesondere Fig. 7 weist der direkt an den Anschluss 134 an höchster Stelle des Mehrfachventils 32 angeschlossene Mischbehälter 28 einen Mischtrichter 160 aus vorzugsweise Edelstahl auf. Der Mischtrichter 160 ist durch einen Behälterdeckel 161 aus ebenfalls Edelstahl oben verschlossen, der gegenüber dem Mischtrichter 160 mittels eines O-Rings 162 abgedichtet ist. Der Behälterdeckel 161 ist ferner mit einer Gewindebohrung versehen, in der ein Anschlusswinkel 163 befestigt ist, an dem ein Belüftungsschlauch 164 angeschlossen ist. Der Belüftungsschlauch 164 kommuniziert mit dem Inneren der Beschichtungsanlage 10, so dass gefilterte Luft in den Mischtrichter 160 gelangen kann. Um ein Anhaften der Beschichtungsstoffe an den Innenwänden des Mischtrichters 160 möglichst zu vermeiden und die Reinigung des Mischtrichters 160 zu vereinfachen und zu beschleunigen, sind innenliegende Oberflächen des Mischtrichters 160 elektropoliert oder besitzen eine Antihaftbeschichtung, wie z.B. eine FEP-Beschichtung.

Zu den Vorratsbehältern 14, 16, 18, 20, 22, 24 ist schließlich noch zu sagen, dass diese entsprechend den Fig. 4 und 6 jeweils mit einem Deckel 165 verschlossen sind, der eine zentrale Öffnung für den Durchtritt des jeweiligen Schlauchs 133, 137, 139, 141, 143, 147 besitzt. Jedem Vorratsbehälter 14, 16, 18, 20, 22, 24 ist ein Filter 166 zugeordnet, der stromaufwärts des Mehrfachventils 32 liegt. Im dargestellten Ausführungsbeispiel befindet sich dieser Filter 166 am Ende des jeweiligen Schlauchs 133, 137, 139, 141, 143, 147 im entsprechenden Vorratsbehälter 14, 16, 18, 20, 22, 24. Bei den Filtern 166 kann es sich z.B. um 10µm PTFE-Filter handeln, wobei sich die Wahl der Filter 166 zum einen nach der Größe der Partikel im jeweiligen Beschichtungsstoff und zum anderen auch nach der Viskosität der Beschichtungsstoffe sowie der gewünschten Spritzengeschwindigkeit richtet.

Anhand des Ablaufdiagramms gemäß Fig. 11 soll abschließend noch ein mögliches Vorgehen beschrieben werden, wie in der Beschichtungsanlage 10 mit der Mischvorrichtung 12 gearbeitet werden kann, um eine Brillenlinse L individuell zu färben. Allgemein zeichnet sich ein Verfahren zum individuellen Färben von insbesondere Brillenlinsen L durch die folgenden Verfahrensschritte aus: (i) Bereitstellen einer Brillenlinse L oder eines Brillenlinsenpaars; (ii) Auswählen einer individuellen Farbe für die Brillenlinse L oder das Brillenlinsenpaar aus einer Mehrzahl von Farben, für deren Anmischung jeweils ein Mischungsverhältnis von verschiedenen Ausgangsfarben bekannt ist; (iii) Dosieren der bereitgestellten verschiedenen Ausgangsfarben in zur Anmischung der ausgewählten individuellen Farbe entsprechend dem bekannten Mischungsverhältnis benötigten Teilmengen für eine Gesamtmenge, die zum Färben der Brillenlinse L oder des Brillenlinsenpaars gerade ausreicht; (iv) Mischen der dosierten Teilmengen von Ausgangsfarben zum Gewinnen einer gemischten Gesamtmenge der ausgewählten individuellen Farbe; und (v) Beschichten der Brillenlinse oder des Brillenlinsenpaars mit der gemischten Gesamtmenge der ausgewählten individuellen Farbe.

Im Detail können die obigen Verfahrensschritte hierbei mit besonderem Blick auf die Mischvorrichtung 12 entsprechend dem Ablaufdiagramm von Fig. 11 ablaufen, welches grundsätzlich vier Prozessabschnitte unterscheidet, nämlich Dosieren, Mischen, Beschichten und Reinigen.

Im ersten Prozessabschnitt (Dosieren) werden die flüssigen Ausgangsstoffe (Farben 1 bis 4) mittels der Spritzenpumpe 117 (Spritze) dosiert. Hierzu wird zunächst die Klappe 104 der Ableiteinrichtung 103 geschlossen, d.h. mittels des Pneumatikzylinders 105 so verschwenkt, dass ein unbeabsichtigtes Beschichten der jeweiligen Brillenlinse L ausgeschlossen ist (Klappe schließen).

Um eine Gesamtmenge der ausgewählten individuellen Farbe zu dosieren, wird das Mehrfachventil 32 anfänglich so geschaltet, dass der in den Fig. 2 und 3 dritte Vorratsbehälter 18 von links mit dem Spritzenzylinder 118 der Spritzenpumpe 117 verbunden ist (Ventilstellung Farbe 1; im Beispiel schwarz). Sodann wird der Spritzenkolben 119 der Spritzenpumpe 117 mittels des Hubantriebs 120 um einen bestimmten ersten Weg in Richtung aus dem Spritzenzylinder 118 heraus bewegt, so dass eine definierte erste Teilmenge der Farbe 1 in den Spritzenzylinder 118 gesaugt wird (Spritze x₁/1000 aufziehen).

Das Mehrfachventil 32 wird danach in eine Ventilstellung geschaltet, in welcher der vierte Vorratsbehälter 20 mit dem Spritzenzylinder 118 der Spritzenpumpe 117 verbunden ist (Ventilstellung Farbe 2; im Beispiel blau), worauf der Spritzenkolben 119 um einen bestimmten zweiten Weg weiter aus dem Spritzenzylinder 118 herausbewegt wird, um eine definierte zweite Teilmenge der Farbe 2 in den Spritzenzylinder 118 zu saugen (Spritze x₂/1000 aufziehen).

Im Anschluss werden die Teilmengen der Farbe 3 aus dem Vorratsbehälter 22 (Ventilstellung Farbe 3; im Beispiel rot) und der Farbe 4 aus dem Vorratsbehälter 24 (Ventilstellung Farbe 4; im Beispiel gelb) in analoger Weise über bestimmte dritte und vierte weitere Wege des Spritzenkolbens 119 im Spritzenzylinder 118 zudosiert (Spritze x₃/1000 aufziehen bzw. Spritze x₄/1000 aufziehen). Die Teilmengen x₁/1000 bis x₄/1000 ergeben sich hierbei aus dem bekannten Mischungsverhältnis für die ausgewählte individuelle Farbe.

Im zweiten Prozessabschnitt (Mischen) werden die im Mischungsverhältnis entsprechend der ausgewählten individuellen Farbe in den Spritzenzylinder 118 eingesaugten Farben 1 bis 4 miteinander vermischt. Hierzu wird das Mehrfachventil 32 in eine Ventilstellung geschaltet, in der der Spritzenzylinder 118 der Spritzenpumpe 117 mit dem den Mischtrichter 160 aufweisenden Mischbehälter 28 verbunden ist (Ventilstellung Mischtrichter). Der Spritzenkolben 119 wird nun mittels des Hubantriebs 120 in den Spritzenzylinder 118 der Spritzenpumpe 117 hinein verschoben, so dass die zuvor in den Spritzenzylinder 118 eingesaugten Farben 1 bis 4 über das Mehrfachventil 32 in den Mischbehälter 28 ausgestoßen werden (Spritze entleeren).

Anschließend wird die gemischte Farbe wieder in bekannter Weise in den Spritzenzylinder 118 eingesaugt (Spritze aufziehen). Beim Passieren des Mischtrichters 160 wird die Farbe hierbei für eine bessere Durchmischung verwirbelt. Um eine besonders gute Durchmischung zu erreichen, wird dieser Vorgang z.B. 6-bis 8-mal wiederholt (im Wechsel Spritze entleeren und Spritze aufziehen).

Zum Beschichten der Brillenlinse L im dritten Prozessabschnitt (Beschichten) wird das Mehrfachventil 32 in eine Ventilstellung geschaltet, in der der Spritzenzylinder 118 mit dem Flüssigkeitsausgang 30 verbunden ist (Ventilstellung Ausstoß). Wie oben schon beschrieben, ist die im Beschichtungsraum 38 angeordnete Düse 40 des Flüssigkeitsausgangs 30 über einen Ausstoßschlauch 145 mit dem Mehrfachventil 32 verbunden. Bevor die im Beschichtungsraum 38 an dem Substrathalter 34 drehend gehaltene Brillenlinse L beschichtet werden kann, ist der aus einem Vorprozess mit Lösungsmittel gefüllte, die Düse 40 und den Ausstoßschlauch 145 umfassende Flüssigkeitsausgang 30 mit der gemischten individuellen Farbe zu füllen. Hierzu wird der Spritzenkolben 119 mittels des Hubantriebs 120 um einen entsprechenden Weg in den Spritzenzylinder 118 der Spritzenpumpe 117 verschoben (Spritze entleeren/Schlauch füllen y₁/1000). Hierbei an der Düse 40 des Flüssigkeitsausgangs 30 austretende Flüssigkeit kann die Brillenlinse L nicht erreichen, da die Brillenlinse L durch die Klappe 104 der Ableiteinrichtung 103 abgeschirmt ist.

Sodann wird die Klappe 104 der Ableiteinrichtung 103 mittels des Pneumatikzylinders 105 in die Freigabeposition verschwenkt (Klappe öffnen). Im Anschluss erfolgt die an sich bekannte Beschichtung der Brillenlinse L, wobei der Spritzenkolben 119 mittels des Hubantriebs 120 um einen bestimmten weiteren Weg in den Spritzenzylinder 118 der Spritzenpumpe 117 verschoben wird. Hierbei verdrängt der Spritzenkolben 119 die zur Beschichtung der Brillenlinse L benötigte Menge an gemischter individueller Farbe, so dass diese in Richtung der rotierenden Brillenlinse L über die Düse 40 ausgestoßen wird (Spritze entleeren/Beschichten y₂/1000). Da in diesem Ausführungsbeispiel zwei Brillenlinsen L beschichtet werden sollen, wird dieser Vorgang - für die zweite Brillenlinse L - noch einmal wiederholt (Spritze entleeren/Beschichten y₃/1000).

In dem - bezogen auf die Mischvorrichtung 12 - abschließenden Prozessabschnitt (Reinigen) wird zunächst die Klappe 104 der Ableiteinrichtung 103 in bekannter Weise geschlossen (Klappe schließen), worauf das Mehrfachventil 32 in eine Ventilstellung geschaltet wird, in welcher der in den Fig. 2 und 3 von links erste Vorratsbehälter 14 für Lösungsmittel mit dem Spritzenzylinder 118 verbunden ist (Ventilstellung Reinigungsmittel). Das Lösungsmittel wird in bekannter Weise in einer zur Reinigung benötigten Menge über den Spritzenkolben 119 in den Spritzenzylinder 118 der Spritzenpumpe 117 angesaugt (Spritze aufziehen z/1000).

Das Mehrfachventil 32 wird sodann in eine Ventilstellung geschaltet, in der der Spritzenzylinder 118 mit dem Mischbehälter 28 verbunden ist (Ventilstellung Mischtrichter). Hierauf wird das Lösungsmittel zum Reinigen des Mischbehälters 28 und der Spritzenpumpe 117 z.B. 3-mal aus dem Spritzenzylinder 118 in den Mischbehälter 28 ausgestoßen (Spritze entleeren) und aus dem Mischbehälter 28 in den Spritzenzylinder 118 angesaugt (Spritze aufziehen).

Im Anschluss wird das Mehrfachventil 32 in eine Ventilstellung geschaltet, in der der Spritzenzylinder 118 mit dem Flüssigkeitsausgang 30 verbunden ist (Ventilstellung Ausstoß). Die vom Beschichtungsvorgang im Ausstoßschlauch 145 und der Düse 40 verbliebene Restfarbe wird mittels des aus dem Spritzenzylinder 118 ausgestoßenen Lösungsmittels verdrängt. Zudem werden der Ausstoßschlauch 145 und die Düse 40 mittels des Lösungsmittels gespült und anschließend wieder mit Lösungsmittel aufgefüllt (Spritze entleeren/Schlauch füllen). Die verdrängte Restfarbe und überschüssiges Lösungsmittel gelangen hierbei über den Ablauf 93 der Beschichtungsschüssel 36, den Anschlusswinkel 94 und den Ablaufschlauch 95 in den Abfallbehälter 96. Schließlich wird die Klappe 104 der Ableiteinrichtung 103 im Beschichtungsraum 38 mittels des Pneumatikzylinders 105 wieder in die Freigabeposition verschwenkt (Klappe öffnen).

In einer Beschichtungsanlage für Brillenlinsen hat eine Vorrichtung zum Mischen/Dosieren von flüssigen Beschichtungsstoffen zumindest einen ersten und einen zweiten Vorratsbehälter für flüssige Ausgangsstoffe, eine Fördereinrichtung zum Ansaugen und Ausstoßen von Flüssigkeiten, einen Mischbehälter und einen Flüssigkeitsausgang für gemischte/dosierte flüssige Beschichtungsstoffe. Dazwischen ist ein Mehrfachventil angeordnet, das in verschiedene Ventilstellungen schaltbar und angepasst ist, eine der folgenden Verbindungen herzustellen und dabei die jeweils anderen Verbindungen zu trennen: (a) Verbindung zwischen dem ersten Vorratsbehälter und der Fördereinrichtung, (b) Verbindung zwischen dem zweiten Vorratsbehälter und der Fördereinrichtung, (c) Verbindung zwischen der Fördereinrichtung und dem Mischbehälter und (d) Verbindung zwischen der Fördereinrichtung und dem Flüssigkeitsausgang. Damit ist insbesondere auch ein Verfahren zum individuellen Färben von Brillenlinsen durchführbar, bei dem die individuelle Farbe nach bekanntem Mischungsverhältnis reproduzierbar für nur eine Brillenlinse oder ein Brillenlinsenpaar angemischt wird.

### BEZUGSZEICHENLISTE

- 10: Beschichtungsanlage
- 12: Mischvorrichtung
- 14: Vorratsbehälter (Lösungsmittel)
- 16: Vorratsbehälter (klarer Primer)
- 18: Vorratsbehälter (schwarzer Primer)
- 20: Vorratsbehälter (blauer Primer)
- 22: Vorratsbehälter (roter Primer)
- 24: Vorratsbehälter (gelber Primer)
- 26: Fördereinrichtung
- 28: Mischbehälter
- 30: Flüssigkeitsausgang
- 32: Mehrfachventil
- 34: Substrathalter
- 36: Beschichtungsschüssel
- 38: Beschichtungsraum
- 40: Düse
- 42: Rahmen
- 43: Abluftrohr
- 44: Frontplatte
- 45: Rollfuß
- 46: Ladestation
- 48: Waschstation
- 50: Beschichtungsstation
- 52: Härtungsstation
- 54: Entladestation
- 56: Karussell
- 57: Drehantrieb
- 58: Steuereinheit
- 60: Touchscreen
- 61: Ein-/Ausschalter
- 62: Notausschalter
- 63: Zentrifugalgebläse
- 64: Nabenabschnitt
- 65: Arm
- 66: Drehdurchführung
- 67: Rahmenbefestigungselement
- 68: Gehäuseabschnitt
- 69: Antriebswelle
- 70: Saugnapf
- 71: Magnetkupplung
- 72: Unterdruckanschluss
- 73: Unterdruckanschluss
- 74: Verteilerabschnitt
- 75: Unterdruckanschluss
- 76: Drehantriebsanordnung
- 77: Drehantriebsanordnung
- 78: Waschbehälter
- 79: Behälter für Waschwasser
- 80: Filter
- 81: Waschwasserzufuhrschlauch
- 82: Absaugung
- 83: Behälter für Abwasser
- 84: Lichtkasten
- 85: Abdeckung
- 86: horizontale Trennwand
- 87: Öffnung
- 88: Bodenabschnitt
- 89: Wandabschnitt
- 90: Befestigungswinkel
- 91: vertikale Trennwand
- 92: Aussparung
- 93: Ablauf
- 94: Anschlusswinkel
- 95: Ablaufschlauch
- 96: Abfallbehälter
- 97: Rohrstück
- 98: Kappe
- 99: Absaugschlauch
- 100: Stutzen
- 101: Abzugsschacht
- 102: Schieber
- 103: Ableiteinrichtung
- 104: Klappe
- 105: Pneumatikzylinder
- 106: Lagerrohr
- 107: Verbindungsbolzen
- 108: Hebel
- 109: Gabelkopf
- 110: Kolbenstange
- 111: Zylindergehäuse
- 112: Halter
- 113: Verschraubung
- 114: Gehäuse
- 115: Flanschplatte
- 116: Winkelblech
- 117: Spritzenpumpe
- 118: Spritzenzylinder
- 119: Spritzenkolben
- 120: Hubantrieb
- 121: Elektromotor
- 122: Getriebemechanismus
- 123: Flanschabschnitt
- 124: Gewindespindel
- 125: Wälzlager
- 126: Riementrieb
- 127: Außengewindeabschnitt
- 128: Betätigungsarm
- 129: Innengewindeabschnitt
- 130: Längsschlitz
- 131: Verteilergehäuse
- 132: Anschluss (Lösungsmittel)
- 133: Schlauch (Lösungsmittel)
- 134: Anschluss (dosierte/gemischte Stoffe)
- 136: Anschluss (gelber Primer)
- 137: Schlauch (gelber Primer)
- 138: Anschluss (roter Primer)
- 139: Schlauch (roter Primer)
- 140: Anschluss (blauer Primer)
- 141: Schlauch (blauer Primer)
- 142: Anschluss (schwarzer Primer)
- 143: Schlauch (schwarzer Primer)
- 144: Anschluss (dosierte/gemischte Stoffe)
- 145: Ausstoßschlauch (dosierte/gemischte Stoffe)
- 146: Anschluss (klarer Primer)
- 147: Schlauch (klarer Primer)
- 148: Anschluss (alle Stoffe)
- 149: Ventilkörper
- 150: Verbindungskanal
- 151: Anschlussstück
- 152: Dichtung
- 153: Verbindungsstück
- 154: Winkelabschnitt
- 155: Winkelabschnitt
- 156: Drehachse
- 157: Elektromotor
- 158: Abtriebswelle
- 159: Querstift
- 160: Mischtrichter
- 161: Behälterdeckel
- 162: O-Ring
- 163: Anschlusswinkel
- 164: Belüftungsschlauch
- 165: Deckel
- 166: Filter

- L: Brillenlinse

## Patentansprüche

1. Beschichtungsanlage (10) zum individuellen Beschichten von Substraten, nämlich Brillenlinsen (L), mit
einer Vorrichtung (12) zum Mischen und/oder Dosieren von flüssigen Beschichtungsstoffen,
einem Substrathalter (34) zum Halten der Substrate während des Beschichtens und
einem Beschichtungsraum (38), in dem ein Flüssigkeitsausgang (30) der Vorrichtung (12) über eine Düse (40) mündet, um den in der Vorrichtung (12) gemischten und/oder dosierten flüssigen Beschichtungsstoff in Richtung des Substrathalters (34) abzugeben,
**dadurch gekennzeichnet, dass** die Vorrichtung (12) zum Mischen und/oder Dosieren von flüssigen Beschichtungsstoffen wenigstens einen ersten und wenigstens einen zweiten Vorratsbehälter (14 - 24) für flüssige Ausgangsstoffe, eine Fördereinrichtung (26) zum Ansaugen und Ausstoßen von Flüssigkeiten, einen Mischbehälter (28), den Flüssigkeitsausgang (30) für gemischte und/oder dosierte flüssige Beschichtungsstoffe sowie ein dazwischen angeordnetes Mehrfachventil (32) umfasst, wobei das Mehrfachventil (32) in verschiedene Ventilstellungen schaltbar und angepasst ist, eine der folgenden Verbindungen (a, b, c, d) herzustellen und dabei die jeweils anderen Verbindungen zu trennen:
(a) Verbindung zwischen dem ersten Vorratsbehälter und der Fördereinrichtung (26),
(b) Verbindung zwischen dem zweiten Vorratsbehälter und der Fördereinrichtung (26),
(c) Verbindung zwischen der Fördereinrichtung (26) und dem Mischbehälter (28) und
(d) Verbindung zwischen der Fördereinrichtung (26) und dem Flüssigkeitsausgang (30).

2. Beschichtungsanlage (10) nach Anspruch 1, **dadurch gekennzeichnet, dass** die Fördereinrichtung (26) eine Spritzenpumpe (117) mit einem Spritzenzylinder (118) und einem Spritzenkolben (119) aufweist, der mittels eines Hubantriebs (120) bezüglich des Spritzenzylinders (118) positionierbar ist.

3. Beschichtungsanlage (10) nach Anspruch 2, **dadurch gekennzeichnet, dass** der Hubantrieb (120) einen Elektromotor (121) aufweist, der über einen Getriebemechanismus (122), welcher eine Drehbewegung in eine Längsbewegung umzuwandeln vermag, mit dem Spritzenkolben (119) in Antriebsverbindung steht.

4. Beschichtungsanlage (10) nach einem der vorhergehenden Ansprüche, **dadurch gekennzeichnet, dass** der Mischbehälter (28) einen Mischtrichter (160) aufweist.

5. Beschichtungsanlage (10) nach Anspruch 4, **dadurch gekennzeichnet, dass** innenliegende Oberflächen des Mischtrichters (160) elektropoliert sind oder eine Antihaftbeschichtung aufweisen.

6. Beschichtungsanlage (10) nach einem der vorhergehenden Ansprüche, **dadurch gekennzeichnet, dass** das Mehrfachventil (32) ein Verteilergehäuse (131) mit Anschlüssen (132, 134, 136, 138, 140, 142, 144, 146, 148) für die Vorratsbehälter (14, 16, 18, 20, 22, 24), den Mischbehälter (28), den Flüssigkeitsausgang (30) und die Fördereinrichtung (26) sowie einen im Verteilergehäuse (131) verdrehbar aufgenommenen Ventilkörper (149) aufweist, der einen Verbindungskanal (150) besitzt, welcher je nach Verdrehstellung des Ventilkörpers (149) im Verteilergehäuse (131) den Anschluss (148) für die Fördereinrichtung (26) mit einem der Anschlüsse (132, 134, 136, 138, 140, 142, 144, 146) für die Vorratsbehälter (14, 16, 18, 20, 22, 24), den Mischbehälter (28) und den Flüssigkeitsausgang (30) zu verbinden vermag.

7. Beschichtungsanlage (10) nach Anspruch 6, **dadurch gekennzeichnet, dass** der Ventilkörper (149) des Mehrfachventils (32) mittels eines Elektromotors (157) im Verteilergehäuse (131) verdrehbar ist.

8. Beschichtungsanlage (10) nach einem der vorhergehenden Ansprüche, **dadurch gekennzeichnet, dass** jedem Vorratsbehälter (14, 16, 18, 20, 22, 24) ein Filter (166) zugeordnet ist, der stromaufwärts des Mehrfachventils (32) liegt.

9. Beschichtungsanlage (10) nach einem der vorhergehenden Ansprüche, **dadurch gekennzeichnet, dass** der Düse (40) im Beschichtungsraum (38) eine Ableiteinrichtung (103) zugeordnet ist, welche wahlweise von einer ein unbeabsichtigtes Beschichten der Substrate verhindernden Ableitposition zwischen der Düse (40) und dem Substrathalter (34) in eine Freigabeposition, in der sich die Ableiteinrichtung (103) nicht zwischen der Düse (40) und dem Substrathalter (34) befindet, und umgekehrt bewegbar ist.

10. Beschichtungsanlage (10) nach Anspruch 9, **dadurch gekennzeichnet, dass** die Ableiteinrichtung (103) eine Klappe (104) aufweist, die mittels eines Pneumatikzylinders (105) verschwenkbar ist.

11. Beschichtungsanlage (10) nach einem der vorhergehenden Ansprüche, **dadurch gekennzeichnet, dass** es sich bei der Beschichtungsanlage (10) um eine Rotationsbeschichtungsanlage handelt.

12. Verfahren zum individuellen Färben von optischen Gläsern, namentlich Brillenlinsen (L), insbesondere unter Verwendung einer Beschichtungsanlage (10) nach einem der vorhergehenden Ansprüche, mit den folgenden Verfahrensschritten:
(i) Bereitstellen einer Brillenlinse oder eines Brillenlinsenpaars;
(ii) Auswählen einer individuellen Farbe für die Brillenlinse oder das Brillenlinsenpaar aus einer Mehrzahl von Farben, für deren Anmischung jeweils ein Mischungsverhältnis von verschiedenen Ausgangsfarben bekannt ist;
(iii) Dosieren der bereitgestellten verschiedenen Ausgangsfarben in zur Anmischung der ausgewählten individuellen Farbe entsprechend dem bekannten Mischungsverhältnis benötigten Teilmengen für eine Gesamtmenge, die zum Färben der Brillenlinse oder des Brillenlinsenpaars gerade ausreicht;
(iv) Mischen der dosierten Teilmengen von Ausgangsfarben zum Gewinnen einer gemischten Gesamtmenge der ausgewählten individuellen Farbe; und
(v) Beschichten der Brillenlinse oder des Brillenlinsenpaars mit der gemischten Gesamtmenge der ausgewählten individuellen Farbe.

## Claims

1. Coating system (10) for individual coating of substrates, namely spectacle lenses (L), comprising
a device (12) for mixing and/or metering liquid coating materials,
a substrate holder (34) for holding the substrate during the coating and
a coating chamber (38) into which a liquid outlet (30) of the device (12) opens by way of a nozzle (40) so as to deliver the liquid coating material, which is mixed and/or metered in the device (12), in the direction of the substrate holder (34),
**characterized in that** the device (12) for mixing and/or metering liquid coating materials comprises at least one first and at least one second storage container (14 - 24) for liquid starting materials, a conveying device (26) for sucking up and expelling liquids, a mixing container (28), the liquid outlet (30) for mixed and/or metered liquid coating materials, and a multi-way valve (32) arranged therebetween, wherein the multi-way valve (32) is switchable into different valve settings and adapted to produce one of the following connections (a, b, c, d) and **in that** case to separate the respective other connections:
(a) connection between the first storage container and the conveying device (26),
(b) connection between the second storage container and the conveying device (26),
(c) connection between the conveying device (26) and the mixing container (28), and
(d) connection between the conveying device (26) and the liquid outlet (30).

2. Coating system (10) according to claim 1, **characterized in that** the conveying device (26) comprises a syringe pump (117) with a syringe cylinder (118) and a syringe piston (119), which is positionable with respect to the syringe cylinder (118) by a stroke drive (120).

3. Coating system (10) according to claim 2, **characterized in that** the stroke drive (120) comprises an electric motor (121) disposed in drive connection with the syringe piston (119) by way of a transmission mechanism (122) capable of converting a rotational movement into a longitudinal movement.

4. Coating system (10) according to any one of the preceding claims, **characterized in that** the mixing container (28) comprises a mixing funnel (160).

5. Coating system (10) according to claim 4, **characterized in that** internal surfaces of the mixing funnel (160) are electropolished or have an anti-adhesion coating.

6. Coating system (10) according to any one the preceding claims, **characterized in that** the multi-way valve (32) comprises a distributor housing (131) with connectors (132, 134, 136, 138, 140, 142, 144, 146, 148) for the storage containers (14, 16, 18, 20, 22, 24), the mixing container (28), the liquid outlet (30) and the conveying device (26) as well as a valve body (149), which is rotatably mounted in the distributor housing (131) and has a connecting channel (150) which as a function of the rotational setting of the valve body (149) in the distributor housing (131) is capable of connecting the connector (148) for the conveying device (26) with one of the connectors (132, 134, 136, 138, 140, 142, 144, 146) for the storage containers (14, 16, 18, 20, 22, 24), the mixing container (28) and the liquid outlet (30).

7. Coating system (10) according to claim 6, **characterized in that** the valve body (149) of the multi-way valve (32) is rotatable by an electric motor (157) in the distributor housing (131).

8. Coating system (10) according to any one of the preceding claims, **characterized in that** a filter (166) disposed upstream of the multi-way valve (32) is associated with each storage container (14, 16, 18, 20, 22, 24).

9. Coating system (10) according to any one of the preceding claims, **characterized in that** a diverter device (103) is associated with the nozzle (40) in the coating chamber (38) and is selectably movable from a diverting position, which prevents unintended coating of the substrates, between the nozzle (40) and the substrate holder (34) into a clearance position, in which the diverter device (103) is not disposed between the nozzle (40) and the substrate holder (34), and conversely.

10. Coating system (10) according to claim 9, **characterized in that** the diverter device (103) comprises a flap (104) which is pivotable by a pneumatic cylinder (105).

11. Coating system (10) according to any one of the preceding claims, **characterized in that** the coating system (10) is a rotary coating system.

12. Method for individual coloring of optical glasses, namely spectacle lenses (L), particularly with use of a coating system (10) according to any one of the preceding claims, comprising the following method steps:
(i) providing a spectacle lens or a spectacle lens pair;
(ii) selecting an individual color for the spectacle lens or the spectacle lens pair from a plurality of colors, for the mixing of which a respective mixing ratio of different starting colors is known;
(iii) metering the provided different starting colors in sub-quantities, which are needed for mixing the selected individual color in correspondence with the known mixing ratio, for a total quantity just sufficient for coloring the spectacle lens or the spectacle lens pair;
(iv) mixing the metered sub-quantities of starting colors in order to obtain a mixed total quantity of the selected individual color; and
(v) coating the spectacle lens or the spectacle lens pair with the mixed total quantity of the selected individual color.

## Revendications

1. Installation de revêtement (10) pour le revêtement individuel de substrats, notamment des verres de lunettes (L), avec
un dispositif (12) pour le mélange et/ou le dosage de matériaux de revêtement liquides,
un support de substrat (34) pour le maintien des substrats pendant le revêtement et
un espace de revêtement (38) dans lequel une sortie de liquide (30) du dispositif (12) débouche par l'intermédiaire d'une buse (40), afin de distribuer le matériau de revêtement liquide mélangé et/ou dosé dans le dispositif (12) en direction du support de substrat (34),
**caractérisée en ce que** le dispositif (12) pour le mélange et/ou le dosage de matériaux de revêtement liquides comprend au moins un premier et au moins un deuxième réservoir (14 - 24) pour des matériaux de sortie liquides, un dispositif de transport (26) pour l'aspiration et l'éjection de liquides, un récipient de mélange (28), la sortie de liquide (30) pour des matériaux de revêtement liquides mélangés et/ou dosés ainsi qu'une soupape multiple (32) disposée entre eux, dans lequel la soupape multiple (32) peut être commutée dans différentes positions de soupape et est conçue pour établir une des liaisons suivantes (a, b, c, d) et pour couper respectivement d'autres liaisons :
(a) liaison entre le premier réservoir et le dispositif de transport (26),
(b) liaison entre le deuxième réservoir et le dispositif de transport (26),
(c) liaison entre le dispositif de transport (26) et le récipient de mélange (28) et
(d) liaison entre le dispositif de transport (26) et la sortie de liquide (30).

2. Installation de revêtement (10) selon la revendication 1, **caractérisée en ce que** le dispositif de transport (26) comprend une pompe d'injection (117) avec un cylindre d'injection (118) et un piston d'injection (119) qui peut être positionné au moyen d'un entraînement de levage (120) par rapport au cylindre d'injection (118).

3. Installation de revêtement (10) selon la revendication 2, **caractérisée en ce que** l'entraînement de levage (120) comprend un moteur électrique (121) qui est en liaison d'entraînement, par l'intermédiaire d'un mécanisme de transmission (122), qui convertit un mouvement de rotation en un mouvement longitudinal, avec le piston d'injection (119).

4. Installation de revêtement (10) selon l'une des revendications précédentes, **caractérisée en ce que** le récipient de mélange (28) comprend un entonnoir de mélange (160).

5. Installation de revêtement (10) selon la revendication 4, **caractérisée en ce que** les surfaces internes de l'entonnoir de mélange (160) sont polies électriquement ou présentent un revêtement anti-adhésif.

6. Installation de revêtement (10) selon l'une des revendications précédentes, **caractérisée en ce que** la soupape multiple (32) comprend un boîtier de répartition (131) avec des raccords (132, 134, 136, 138, 140, 142, 144, 146, 148) pour les réservoirs (14, 16, 18, 20, 22, 24), le récipient de mélange (28), la sortie de liquide (30) et le dispositif de transport (26) ainsi qu'un corps de soupape (149) logé de manière rotative dans le boîtier de répartition (131), qui comprend un canal de liaison (150) qui permet de relier, selon la position de rotation du corps de soupape (149) dans le boîtier de répartition (131), le raccord (148) pour le dispositif de transport (26) avec un des raccords (132, 134, 136, 138, 140, 142, 144, 146) pour les réservoirs (14, 16, 18, 20, 22, 24), le récipient de mélange (28) et la sortie de liquide (30).

7. Installation de revêtement (10) selon la revendication 6, **caractérisée en ce que** le corps de soupape (149) de la soupape multiple (32) peut être mis en rotation au moyen d'un moteur électrique (157) dans le boîtier de répartition (131).

8. Installation de revêtement (10) selon l'une des revendications précédentes, **caractérisée en ce que**, à chaque réservoir (14, 16, 18, 20, 22, 24), correspond un filtre (166) qui se trouve en amont de la soupape multiple (32).

9. Installation de revêtement (10) selon l'une des revendications précédentes, **caractérisée en ce que**, à la buse (40) dans l'espace de revêtement (38), correspond un dispositif de dérivation (103) qui peut être déplacé, de manière sélective, d'une position de dérivation empêchant un revêtement indésirable des substrats entre la buse (40) et le support de substrat (34) vers une position déverrouillée dans laquelle le dispositif de dérivation (103) ne se trouve pas entre la buse (40) et le support de substrat (34) et inversement.

10. Installation de revêtement (10) selon la revendication 9, **caractérisée en ce que** le dispositif de dérivation (103) comprend un clapet (104) qui peut être pivoté au moyen d'un vérin pneumatique (105).

11. Installation de revêtement (10) selon l'une des revendications précédentes, **caractérisée en ce que** l'installation de revêtement (10) est une installation de revêtement rotative.

12. Procédé de coloration individuelle de verres optiques, notamment de verres de lunettes (L), plus particulièrement à l'aide d'une installation de revêtement (10) selon l'une des revendications précédentes, avec les étapes suivantes :
(i) mise à disposition d'un verre de lunettes ou d'une paire de verres de lunettes ;
(ii) sélection d'une couleur individuelle pour le verre de lunettes ou la paire de verres de lunettes parmi une pluralité de couleurs, un rapport de mélange de différentes couleurs de départ étant connu pour leur réalisation ;
(iii) dosage des différentes couleurs de départ mises à disposition dans les quantités partielles nécessaires pour le rapport de mélange connu pour la réalisation la couleur individuelle sélectionnée, afin d'obtenir une quantité totale suffisante pour la coloration du verre de lunettes ou de la paire de verres de lunettes ;
(iv) mélange des quantités partielles dosées des couleurs de départ afin d'obtenir une quantité totale mélangée de la couleur individuelle sélectionnée ; et
(v) revêtement du verre de lunettes ou de la paire de verres de lunettes avec la quantité totale mélangée de la couleur individuelle sélectionnée.
